(19) Europäisches Patentamt
European Patent Office
Office européen des brevets

(11) EP 2 674 459 A1

(12) **EUROPEAN PATENT APPLICATION**
published in accordance with Art. 153(4) EPC

(43) Date of publication:
**18.12.2013 Bulletin 2013/51**

(21) Application number: **12745046.8**

(22) Date of filing: **07.02.2012**

(51) Int Cl.:
***C08L 67/04*** *(2006.01)*
***C08K 5/06*** *(2006.01)*
***C08K 5/20*** *(2006.01)*
***C08L 101/16*** *(2006.01)*
***B29C 51/10*** *(2006.01)*
***C08K 5/10*** *(2006.01)*
***C08L 71/02*** *(2006.01)*

(86) International application number:
**PCT/JP2012/052729**

(87) International publication number:
**WO 2012/108425 (16.08.2012 Gazette 2012/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2011 JP 2011024244**

(71) Applicant: **Kao Corporation**
**Chuo-ku**
**Tokyo 103-8210 (JP)**

(72) Inventors:
- **OKUTSU, Munehisa**
  **Wakayama 640-8580 (JP)**
- **HASHIMOTO, Ryoichi**
  **Wakayama 640-8580 (JP)**
- **TAKENAKA, Akira**
  **Wakayama 640-8580 (JP)**

(74) Representative: **HOFFMANN EITLE**
**Patent- und Rechtsanwälte**
**Arabellastrasse 4**
**81925 München (DE)**

(54) **POLYLACTIC ACID RESIN COMPOSITION**

(57) A polylactic acid resin composition containing a polylactic acid resin; a lasticizer, preferably a plasticizer represented by the formula (4) and/or a plasticizer represented by the formula (5); a nonionic surfactant represented by the formula (1), such as an ester obtained from a fatty acid and a polyoxyethylene glycol or a polyoxyethylene-polyoxypropylene copolymer; and a crystal nucleating agent represented by the formula (2) and/or a crystal nucleating agent represented by the formula (3). The polylactic acid resin composition of the present invention can be suitably used in various industrial applications, such as daily sundries, food wrapping materials, household electric appliance parts, packaging materials for household electric appliance parts, and automobile parts.

[Figure 1]

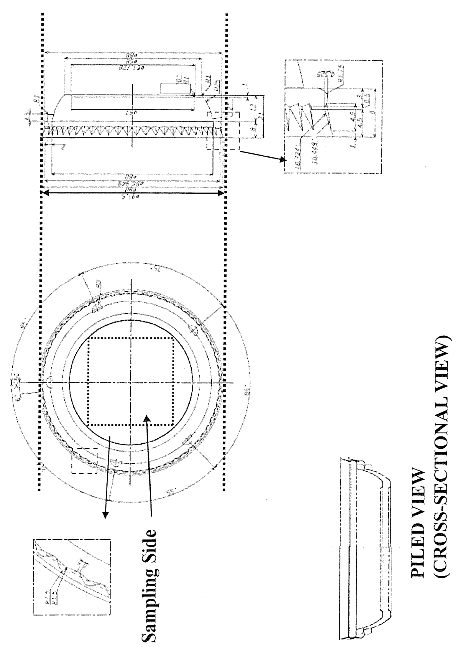


FIG. 1 VACUUM-FORMED ARTICLE (CUP-SHAPED)

EP 2 674 459 A1

## Description

### TECHNICAL FIELD

The present invention relates to a polylactic acid resin composition. More specifically, the present invention relates to a polylactic acid resin composition having improved secondary formability, and especially thermoforming property, a sheet obtainable with the composition, a formed article obtainable by subjecting the sheet to a secondary forming, a method for secondary forming of the sheet, and a wrapping material made of the formed article.

### BACKGROUND ART

For food containers and wrapping containers, various plastics such as polyolefins such as polyethylenes, polypropylenes, and polystyrenes, and polyesters represented by polyethylene terephthalate (PET) have been used.

On the other hand, with an increased awareness for the environmental protection, the developments of environmental-friendly resins having excellent biodegradability, and further having excellent safety when used in food containers are in progress as replacements for the resins described above, among which many studies have been made for polylactic acid resins as environmental-friendly resins having excellent biodegradability. In addition, since the polylactic acid resins have excellent transparency, the applications of the resins to food containers and wrapping containers have been expected.

However, polylactic acid resins have not only physical properties that are rigid and brittle, but also low secondary formability, so that in cases where the polylactic acid resins are formed into food containers or wrapping containers or the like, there are some disadvantages that the formed products are deficient in flexibility, that whitening takes place in the formed products upon bending, etc., thereby having worsened forming property into a formed article.

Because of these disadvantages, in the current situations, the formed articles made of polylactic acid resins are limited in use primarily in the fields of rigid formed articles. In view of the above, methods including adding various plasticizers in order to make up for the above disadvantages have been tried.

For example, it has been tried to use, for example, lactic acid, a lactic acid oligomer, an aliphatic polycarboxylic acid ester, a copolymer of a polylactic acid and a polyalkylene ether or the like as a plasticizer, with the aims of affinity of a plasticizer with the polylactic acid and suppression of bleed-out property caused by a molecular weight increase of the plasticizer. However, these plasticizers have various disadvantages such as the plasticizer has low thermal stability during molding, so that the resulting formed product has a worsened strength, and further has insufficient improvement in secondary forming, and a disadvantage in bleed-out takes place.

On the other hand, it is disclosed that a particular plasticizer, e.g. a succinic acid ester, and a particular crystal nucleating agent, e.g. an organic crystal nucleating agent, are used in combination with a polylactic acid, thereby promoting crystallization in thermoforming while maintaining transparency, whereby heat resistance etc. of the formed article can be improved, cf. Patent Document 1. Also, likewise, it is disclosed that talc is used as a crystal nucleating agent, and this talc is used in combination with a nonionic surfactant, thereby promoting the crystallization and improving heat resistance, cf. Patent Document 2.

However, as resins that are replaceable with various plastics, further improvements are needed in the conventional polylactic acid resins. Specifically, in the thermoforming of a polylactic acid resin, it has been desired to develop an improver, an additive, that maintains transparency, and has a wide thermoformable temperature range, and has a sufficient crystallization velocity, in other words, one that can realize sufficient thermoformability, which gives a wide temperature range that can satisfy both forming property and crystallization.

### PRIOR ART PUBLICATIONS

### PATENT PUBLICATIONS

Patent Publication 1: Japanese Patent Laid-Open No. 2007-130895
Patent Publication 2: Japanese Patent Laid-Open No. 2007-246624

### SUMMARY OF THE INVENTION

The present invention relates to:

[1] a polylactic acid resin composition containing:

a polylactic acid resin;
a plasticizer;
a nonionic surfactant represented by the formula (1):

$$R^1\text{-}O(A^1O)_p\text{-}R^2 \qquad (1)$$

wherein $R^1$ is an alkyl group having from 8 to 22 carbon atoms, an acyl group having from 8 to 22 carbon atoms in total, or a hydrogen atom; $R^2$ is a hydrogen atom, an alkyl group having from 1 to 4 carbon atoms, or an acyl group having from 2 to 4 carbon atoms in total; $A^1$ is an alkylene group having 2 or 3 carbon atoms; and p is the number showing an average number of moles of oxyalkylene groups added that satisfies $0 < p \leq 300$, wherein p number of oxyalkylene groups represented by $(A^1O)$ may be identical or different, and the repeating units, when different, may be either in a block form or a random form; and
a crystal nucleating agent represented by the formula (2):

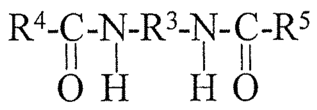
(2)

wherein $R^3$ is an alkylene group having from 1 to 10 carbon atoms; and $R^4$ and $R^5$ are a linear or branched alkyl group having from 5 to 21 carbon atoms, which may have a substituent, that may be identical or different, and/or
a crystal nucleating agent represented by the formula (3):

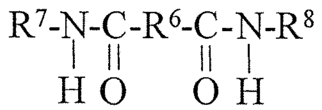
(3)

wherein $R^6$ is an alkylene group having from 1 to 10 carbon atoms; and $R^7$ and $R^8$ are a linear or branched alkyl group having from 6 to 22 carbon atoms, which may have a substituent, that may be identical or different;

[2] a sheet containing a polylactic acid resin composition as defined in the above [1], the sheet having a relative degree of crystallinity of 80% or less;
[3] a formed article obtainable by vacuum forming or pressure forming a sheet as defined in the above [2];
[4] a method for secondary forming of a sheet, characterized by vacuum forming or pressure forming a sheet as defined in the above [2]; and
[5] a wrapping material made of a formed article as defined in the above [3].

BRIEF DESCRIPTION OF THE DRAWINGS

[Figure 1] Figure 1 shows a die used when evaluating thermoforming property.

DETAILED DESCRIPTION OF THE INVENTION

As a result of the studies made in view of the above circumstances, the present inventors have found that since a particular crystal nucleating agent and a particular nonionic surfactant are combined in addition to a polylactic acid resin and a plasticizer, a polylactic acid resin composition which can satisfy both of forming property in thermoforming and crystallization while maintaining transparency, in other words a resin composition having remarkably improved thermoforming property is obtained. The present invention has been perfected thereby.
The present invention relates to a polylactic acid resin composition having improved secondary formability, especially thermoforming property, the resin composition containing an additive capable of giving a polylactic acid resin sufficient secondary formability, a sheet obtainable with the composition, a formed article obtainable by subjecting the sheet to a secondary forming, a method for secondary forming of the sheet, and a wrapping material made of the formed article. Also, the present invention relates to a polylactic acid resin composition having excellent transparency, heat resistance and bleeding resistance, a sheet obtainable with the composition, a formed article such as a thermoformed article, obtainable by subjecting the sheet to a secondary forming, a method for secondary forming of the sheet, and a wrapping material made of the formed article.

Since the polylactic acid resin composition of the present invention has excellent secondary formability, especially thermoforming property, the sheet or film or the like obtained with the polylactic acid resin composition of the present invention is subjected to thermoforming, whereby some effects that the resin composition can be very easily formed into a formed article are exhibited. In addition, since the polylactic acid resin composition has excellent thermoforming property, the polylactic acid resin composition of the present invention has excellent transparency, heat resistance, and bleeding resistance.

The polylactic acid resin composition of the present invention has one feature in that the composition contains, in addition to a polylactic acid resin, particular additives, specifically a plasticizer, a particular nonionic surfactant and a particular crystal nucleating agent.

(Plasticizer)

The plasticizer in the present invention is not particularly limited, and includes known ones, including, for example, polycarboxylic acid esters such as phthalic acid esters such as dioctyl phthalate, succinic acid esters such as dioctyl succinate, and adipic acid esters such as dioctyl adipate; aliphatic acid esters of aliphatic polyols such as glycerol; and the like. From the viewpoint of improving transparency, heat resistance, and bleeding resistance of the polylactic acid resin composition, it is preferable that the plasticizer contains a compound represented by the formula (4):

$$R^9\text{-}O(A^2O)_m\text{-}CORCOO\text{-}(A^2O)_n\text{-}R^{10} \qquad (4)$$

wherein $R^9$ and $R^{10}$ are an alkyl group having from 1 to 4 carbon atoms or a benzyl group, wherein $R^9$ and $R^{10}$ may be identical or different; R is an alkylene group having from 1 to 4 carbon atoms; $A^2$ is an alkylene group having 2 or 3 carbon atoms, wherein m or n number of $A^2$'s may be identical or different, and each of m and n is the number showing an average number of moles of oxyalkylene groups added that satisfies $0 \le m \le 5, 0 \le n \le 5$, and $1 \le m + n \le 8$; and/or a compound represented by the formula (5):

$$R^{11}O\text{-}CO\text{-}R^{12}\text{-}CO\text{-}[(OR^{13})_sO\text{-}CO\text{-}R^{12}\text{-}CO\text{-}]_tOR^{11} \qquad (5)$$

wherein $R^{11}$ is an alkyl group having from 1 to 4 carbon atoms; $R^{12}$ is a linear alkylene group having from 2 to 4 carbon atoms; $R^{13}$ is an alkylene group having from 2 to 6 carbon atoms; s is an integer of from 1 to 6 showing an average number of moles of oxyalkylene groups added; and t is the number of from 1 to 6 showing the number of repeats of $(OR^{13})_sO\text{-}CO\text{-}R^{12}\text{-}CO\text{-}$, wherein all the $R^{12}$'s may be identical or different and wherein all the $R^{13}$'s may be identical or different.

Since the carboxylic acid ester represented by the formula (4) has a sufficient molecular weight and thermal stability, and has a high affinity to the polylactic acid resin, some effects that the carboxylic acid ester has excellent volatile resistance, and is capable of giving flexibility without hampering transparency of the composition are exhibited.

$R^9$ and $R^{10}$ in the formula (4) are an alkyl group having from 1 to 4 carbon atoms, or a benzyl group. The alkyl group having from 1 to 4 carbon atoms may be linear or branched. Specific examples include a methyl group, an ethyl group, a propyl group, an isopropyl group, a butyl group, an isobutyl group, and the like. Among them, the alkyl groups having from 1 to 2 carbon atoms, i.e. a methyl group and an ethyl group, are preferred, from the viewpoint of improving affinity to the polylactic acid resin. Here, $R^9$ and $R^{10}$ may be identical or different. In addition, benzyl group is preferred, from the viewpoint of improving volatile resistance.

R in the formula (4) is an alkylene group having from 1 to 4 carbon atoms. The alkylene group having from 1 to 4 carbon atoms may be linear or branched, and specifically includes a methylene group, an ethylene group, a propylene group, an isopropylene group, a butylene group, an isobutylene group, a tetramethylene group, and the like. Among them, an alkylene group having from 2 to 3 carbon atoms, i.e. an ethylene group, a propylene group, or an isopropylene group, is preferred, from the viewpoint of improving affinity to the polylactic acid resin and plasticization efficiency.

$A^2$ in the formula (4) is an alkylene group having 2 or 3 carbon atoms, and $A^2O$ is an oxyalkylene group. The alkylene group having 2 or 3 carbon atoms may be linear or branched, and includes an ethylene group, a propylene group, an isopropylene group and the like. Here, m number of $A^2$ and n number of $A^2$ may be identical or different.

Each of m and n in the formula (4) is the number showing an average number of moles of oxyalkylene groups added that satisfies $0 \le m \le 5$, $0 \le n \le 5$, and $1 \le m + n \le 8$. In the present invention, m and n preferably satisfy $0 \le m \le 5$, $0 \le n \le 5$, and $4 \le m + n \le 8$, more preferably $0 \le m \le 5$, $0 \le n \le 5$, and $6 \le m + n \le 8$, and even more preferably each of m and n is 3, from the viewpoint of improving affinity to the polylactic acid resin and plasticization efficiency.

The compound represented by the formula (4) has an average molecular weight of preferably 250 or more, more preferably from 250 to 700, even more preferably from 300 to 600, and still even more preferably from 330 to 500, from the viewpoint of improving volatile resistance, bleeding resistance, and plasticization efficiency. Here, the average molecular weight of the plasticizer as used herein can be obtained by obtaining a saponification value in accordance

with a method prescribed in JIS K0070, and calculating according to the following formula:

$$\text{Average Molecular Weight} = 56{,}108 \times \frac{\text{Number of Ester Groups}}{\text{Saponification Value}}$$

Accordingly, the carboxylic acid ester represented by the formula (4) is:

<1> preferably a compound in which $R^9$ and $R^{10}$ are an alkyl group having from 1 to 4 carbon atoms or a benzyl group, wherein $R^9$ and $R^{10}$ may be identical or different, R is an alkylene group having from 1 to 4 carbon atoms, $A^2$ is an alkylene group having 2 or 3 carbon atoms, wherein m or n number of $A^2$'s may be identical or different, and each of m and n is the number showing an average number of moles of oxyalkylene groups added that satisfies $0 \leq m \leq 5$, $0 \leq n \leq 5$, and $1 \leq m + n \leq 8$;
<2> more preferably a compound in which $R^9$ and $R^{10}$ are an alkyl group having from 1 to 4 carbon atoms or a benzyl group, wherein $R^9$ and $R^{10}$ may be identical or different, R is an alkylene group having from 1 to 4 carbon atoms, $A^2$ is an alkylene group having 2 or 3 carbon atoms, wherein m or n number of $A^2$'s may be identical or different, and each of m and n is the number showing an average number of moles of oxyalkylene groups added that satisfies $0 \leq m \leq 5$, $0 \leq n \leq 5$, and $4 \leq m + n \leq 8$;
<3> even more preferably a compound in which $R^9$ and $R^{10}$ are an alkyl group having from 1 to 4 carbon atoms or a benzyl group, wherein $R^9$ and $R^{10}$ may be identical or different, R is an alkylene group having from 1 to 4 carbon atoms, $A^2$ is an alkylene group having 2 or 3 carbon atoms, wherein m or n number of $A^2$'s may be identical or different, and each of m and n is the number showing an average number of moles of oxyalkylene groups added that satisfies $0 \leq m \leq 5$, $0 \leq n \leq 5$, and $6 \leq m + n \leq 8$; and
<4> still even more preferably a compound in which $R^9$ and $R^{10}$ are an alkyl group having from 1 to 2 carbon atoms or a benzyl group, wherein $R^9$ and $R^{10}$ may be identical or different, R is an alkylene group having from 2 to 3 carbon atoms, $A^2$ is an alkylene group having 2 or 3 carbon atoms, wherein m or n number of $A^2$'s may be identical or different, and each of m and n is the number showing an average number of moles of oxyalkylene groups added that satisfies m = 3 and n = 3.

Specific examples of the carboxylic acid ester represented by the formula (4) include, for example, diesters obtained from saturated dicarboxylic acids such as malonic acid, succinic acid, glutaric acid, 2-methylsuccinic acid, and adipic acid, and polyethylene glycol monoalkyl ethers such as diethylene glycol monomethyl ether, diethylene glycol monoethyl ether, triethylene glycol monomethyl ether, triethylene glycol monoethyl ether, and tetraethylene glycol monomethyl ether, or benzyl alcohol. Among them, succinic acid esters are preferred, and a diester obtained from succinic acid and triethylene glycol monomethyl ether is more preferred, from the viewpoint of improving bleeding resistance and plasticization efficiency. In addition, an ester compound obtained from adipic acid and a mixture of diethylene glycol monomethyl ether/benzyl alcohol, weight ratio of which is 1:1, is preferred, from the viewpoint of improving volatile resistance.

Since the carboxylic acid ester represented by the formula (5) has a sufficient molecular weight and thermal stability, and has a high affinity to the polylactic acid resin, the carboxylic acid ester exhibits some effects of having excellent volatile resistance and being capable of giving the composition flexibility without hampering transparency.

$R^{11}$ in the formula (5) is an alkyl group having from 1 to 4 carbon atoms, and two of them exist in one molecule, the two existing at both terminals of the molecule. The alkyl group having from 1 to 4 carbon atoms may be linear or branched, and the number of carbon atoms of the alkyl group is preferably from 1 to 4, and more preferably from 1 to 2, from the viewpoint of improving compatibility with the polylactic acid resin and plasticization efficiency. Specific examples include a methyl group, an ethyl group, a propyl group, an isopropyl group, a butyl group, a *sec*-butyl group, and a *tert*-butyl group, among which a methyl group or an ethyl group is preferred, and a methyl group is more preferred, from the viewpoint of improving compatibility with the polylactic acid resin and plasticization efficiency.

$R^{12}$ in the formula (5) is a linear alkylene group having from 2 to 4 carbon atoms. Specific examples include an ethylene group, a 1,3-propylene group, and a 1,4-butylene group, among which an ethylene group is preferred, from the viewpoint of improving compatibility with the polylactic acid resin and plasticization efficiency. Here, all the $R^{12}$'s may be identical or different.

$R^{13}$ in the formula (5) is an alkylene group having from 2 to 6 carbon atoms, and $OR^{13}$ exists as an oxyalkylene group in the repeating units. The alkylene group having from 2 to 6 carbon atoms may be linear or branched, and the number of carbon atoms of the alkylene group is preferably from 2 to 6, and more preferably from 2 to 3, from the viewpoint of improving compatibility with the polylactic acid resin and plasticization efficiency. Specific examples include an ethylene group, a 1,2-propylene group, a 1,3-isopropylene group, a 1,2-butylene group, a 1,3-butylene group, a 1,4-butylene group, a 2-methyl-1,3-propylene group, a 1,2-pentylene group, a 1,4-pentylene group, a 1,5-pentylene group,

a 2,2-dimethyl-1,3-propylene group, a 1,2-hexylene group, a 1,5-hexylene group, a 1,6-hexylene group, a 2,5-hexylene group, and a 3-methyl-1,5-pentylene group, among which an ethylene group, a 1,2-propylene group, or a 1,3-propylene group is preferred, from the viewpoint of improving compatibility with the polylactic acid resin and plasticization efficiency. Here, all the $R^{13}$'s may be identical or different.

s is an integer of from 1 to 6 showing an average number of moles of oxyalkylene groups added. It is preferably an integer of from 1 to 3, from the viewpoint of improving compatibility with the polylactic acid resin and volatile resistance.

t is the number of from 1 to 6 showing the number of repeats, i.e., average degree of polymerization, of $(OR^{13})$ SO-CO-$R^{12}$-CO-, which may be also referred to as the repeating unit in the formula (5). It is preferably the number of from 1 to 4, from the viewpoint of improving compatibility with the polylactic acid resin and plasticization efficiency.

Accordingly, the carboxylic acid ester represented by the formula (5) is:

<1> preferably a compound in which $R^{11}$ is an alkyl group having from 1 to 4 carbon atoms; $R^{12}$ is a linear alkylene group having from 2 to 4 carbon atoms; $R^{13}$ is an alkylene group having from 2 to 6 carbon atoms; s is an integer of from 1 to 6 showing an average number of moles of oxyalkylene groups added; and t is the number of from 1 to 6 showing the number of repeats of $(OR^{13})_sO$-CO-$R^{12}$-CO-, wherein all the $R^{12}$'s may be identical or different, and wherein all the $R^{13}$'s may be identical or different; and

<2> more preferably a compound in which $R^{11}$ is an alkyl group having from 1 to 2 carbon atoms; $R^{12}$ is an ethylene group; $R^{13}$ is an alkylene group having from 2 to 3 carbon atoms; s is an integer of from 1 to 3 showing an average number of moles of oxyalkylene groups added; and t is the number of from 1 to 4 showing the number of repeats of $(OR^{13})_sO$-CO-$R^{12}$-CO-, wherein all the $R^{12}$'s may be identical or different, and wherein all the $R^{13}$'s may be identical or different.

Among the carboxylic acid esters represented by the formula (5), oligoesters obtained from at least one dibasic acid selected from succinic acid, glutaric acid, and adipic acid, and at least one dihydric alcohol selected from diethylene glycol, triethylene glycol, 1,2-propanediol, 1,3-propanediol, i.e. in the formula (5), t = from 1.2 to 3, are preferred, from the viewpoint of improving volatile resistance.

The carboxylic acid ester represented by the formula (4) and the carboxylic acid ester represented by the formula (5) may be commercially available products, or those synthesized in accordance with known production methods. For example, the carboxylic acid ester represented by the formula (4) can be produced in accordance with a method as disclosed in Japanese Patent Laid-Open No. 2006-176748.

The plasticizer is contained in the polylactic acid resin composition of the present invention in an amount of preferably from 1 to 40 parts by weight, more preferably from 1 to 30 parts by weight, and even more preferably from 1 to 20 parts by weight, based on 100 parts by weight of the polylactic acid resin, from the viewpoint of improving transparency, heat resistance, and bleeding resistance of the polylactic acid resin composition. Further, when heat resistance of an amorphous sheet is needed, a polylactic acid resin composition having a higher glass transition temperature is preferred, and the plasticizer is contained in the polylactic acid resin composition of the present invention in an amount of preferably from 1 to 10 parts by weight, more preferably from 1 to 7 parts by weight, and even more preferably from 1 to 5 parts by weight, based on 100 parts by weight of the polylactic acid resin. In addition, the carboxylic acid ester represented by the formula (4) and/or the carboxylic acid ester represented by the formula (5) is contained in an amount of preferably 60% by weight or more, more preferably 70% by weight or more, and even more preferably 90% by weight or more, of the entire plasticizers, from the viewpoint of improving bleeding resistance, plasticization efficiency, and secondary formability. Here, in the present specification, the amount of the carboxylic acid ester represented by the formula (4) and/or the carboxylic acid ester represented by the formula (5) contained means a total content of the carboxylic acid ester represented by the formula (4) and the carboxylic acid ester represented by the formula (5) contained in the composition, and the entire plasticizers mean combined amounts of the compound represented by the formula (4), the compound represented by the formula (5), and other plasticizers contained in the composition.

In addition, the carboxylic acid ester represented by the formula (4) and/or the carboxylic acid ester represented by the formula (5) is contained in the polylactic acid resin composition of the present invention in an amount of preferably from 1 to 30 parts by weight, more preferably from 1 to 20 parts by weight, and even more preferably from 1 to 10 parts by weight, based on 100 parts by weight of the polylactic acid resin, from the viewpoint of improving bleeding resistance, secondary formability, and heat resistance. When the amount is 1 part by weight or more, the secondary formability becomes favorable, and when the amount is 30 parts by weight or less, heat resistance and bleeding resistance can be made favorable.

(Nonionic Surfactant)

The nonionic surfactant in the present invention is a compound represented by the formula (1):

$R^1\text{-}O(A^1O)_p\text{-}R^2$ (1)

wherein $R^1$ is an alkyl group having from 8 to 22 carbon atoms, an acyl group having from 8 to 22 carbon atoms in total, or a hydrogen atom; $R^2$ is a hydrogen atom, an alkyl group having from 1 to 4 carbon atoms, or an acyl group having from 2 to 4 carbon atoms in total; $A^1$ is an alkylene group having 2 or 3 carbon atoms; and p is the number showing an average number of moles of oxyalkylene groups added that satisfies $0 < p \leq 300$, wherein p number of oxyalkylene groups represented by ($A^1O$) may be identical or different, and the repeating units, when different, may be either in a block form or a random form.

Since the compound represented by the formula (1) has excellent affinity to and dispersibility with the polylactic acid resin and a crystal nucleating agent or the like, the compound exhibits some effects that transparency and sufficient thermoforming property in the thermoforming, in other words, a wider temperature range that can satisfy both forming property and crystallization, can be realized by combining the compound with the plasticizer represented by the formula (4).

$R^1$ in the formula (1) is an alkyl group having from 8 to 22 carbon atoms, an acyl group having from 8 to 22 carbon atoms in total, or a hydrogen atom.

The alkyl group having from 8 to 22 carbon atoms may be linear or branched, and the alkyl group may be saturated or unsaturated. Specific examples include linear alkyl groups such as an octyl group, a nonyl group, a decyl group, an undecyl group, a dodecyl group (a lauryl group), a tridecyl group, a tetradecyl group (a myristyl group), a pentadecyl group, a hexadecyl group (a cetyl group), a heptadecyl group, an octadecyl group (a stearyl group), a nonadecyl group, an eicosyl group, and a behenyl group; branched alkyl groups such as a 2-ethylhexyl group, a 1-hexadecyl group, an isodecyl group, and an isostearyl group; unsaturated alkyl groups such as an undecenyl group and an oleyl group; and the like. The acyl group having from 8 to 22 carbon atoms in total may be saturated or unsaturated, so long as the acyl group has from 8 to 22 carbon atoms in total. The acyl group is exemplified by linear acyl groups such as an octanoyl group, a nonanoyl group, a decanoyl group, an undecanoyl group, a dodecanoyl group (a lauroyl group), a tridecanoyl group, a tetradecanoyl group, a pentadecanoyl group, a hexadecanoyl group, a heptadecanoyl group, an octadecanoyl group, a nonadecanoyl group, an eicosanoyl group, and a behenoyl group; branched acyl groups such as a 2-ethylhexanoyl group; unsaturated acyl groups originated from oleic acid; and the like.

Among them, $R^1$ in the formula (1) is preferably a saturated or unsaturated acyl group having from 8 to 22 carbon atoms in total, and more preferably a saturated or unsaturated acyl group having from 10 to 18 carbon atoms in total.

$R^2$ in the formula (1) is a hydrogen atom, an alkyl group having from 1 to 4 carbon atoms, or an acyl group having from 2 to 4 carbon atoms in total.

The alkyl group having from 1 to 4 carbon atoms may be linear or branched. Specific examples include a methyl group, an ethyl group, a propyl group, an isopropyl group, a butyl group, a *sec*-butyl group, and a *tert*-butyl group.

The acyl group having from 2 to 4 carbon atoms in total may be saturated or unsaturated. Specific examples are illustrated by an acetyl group, a propanoyl group, a butanoyl group, and the like.

Among them, $R^2$ in the formula (1), when $R^1$ is an alkyl group having from 8 to 22 carbon atoms or an acyl group having from 8 to 22 carbon atoms in total, is preferably a hydrogen atom or a methyl group, and more preferably a hydrogen atom. In addition, when $R^1$ in the formula (1) is a hydrogen atom, it is preferable that $R^2$ is also a hydrogen atom.

$A^1$ in the formula (1) is an alkylene group having from 2 or 3 carbon atoms, and $A^1O$ is an oxyalkylene group. The alkylene group having 2 or 3 carbon atoms may be linear or branched, and includes an ethylene group, a propylene group, an isopropylene group and the like, and an ethylene group or an isopropylene group is preferred. Here, p number of $A^1O$ may be identical or different. When different, the repeating units may be either in a block form or a random form, and preferably in a block form, preferably in a block form of polyoxypropylene-polyoxyethylene-polyoxypropylene or polyoxyethylene-polyoxypropylene-polyoxyethylene, and the repeating units are more preferably in a block form of polyoxypropylene-polyoxyethylene-polyoxypropylene, from the viewpoint of formable temperature range and transparency.

p in the formula (1) shows an average number of moles of oxyalkylene groups added that satisfies $0 < p \leq 300$. When $R^1$ is an alkyl group having from 8 to 22 carbon atoms, or an acyl group having from 8 to 22 carbon atoms in total, it preferably satisfies $2 \leq p \leq 50$, and more preferably satisfies $5 \leq p \leq 20$. When $R^1$ is a hydrogen atom, it preferably satisfies $10 \leq p \leq 200$, and more preferably satisfies $20 \leq p \leq 100$. In addition, when both of $R^1$ and $R^2$ are a hydrogen atom, it preferably satisfies $10 \leq p \leq 200$, and more preferably satisfies $20 \leq p \leq 100$. Furthermore, when $R^1$ is a hydrogen atom, $(A^1O)_p$ preferably contains different $A^1O$'s, among which block forms of polyoxypropylene-polyoxyethylene-polyoxypropylene or polyoxyethylene-polyoxypropylene-polyoxyethylene are more preferred, and block forms of polyoxypropylene-polyoxyethylene-polyoxypropylene are even more preferred. The number p' of $A^1O$ constituting each of the block units in that case each preferably satisfies $5 \leq p' \leq 80$, and more preferably satisfies $5 \leq p' \leq 60$. Moreover, the polyoxyethylene EO and the polyoxypropylene PO in that case are in a weight ratio EO/PO of preferably from 5/95 to 70/30, more preferably from 5/95 to 60/40, even more preferably from 10/90 to 50/50, even more preferably from 10/90 to 40/60, even more preferably from 10/90 to 30/70, and even more preferably from 15/85 to 25/75.

The average molecular weight of the compound represented by the formula (1) is preferably from 300 to 100,000, more preferably from 500 to 50,000, even more preferably from 500 to 10,000, and even more preferably from 500 to 6,000, from the viewpoint of improving fluidity during melt-kneading of the raw materials for the polylactic acid resin composition and bleeding resistance during forming. Further, the average molecular weight is even more preferably from 1,000 to 6,000, and still even more preferably from 2,000 to 6,000, from the viewpoint of heat resistance of the sheet in an amorphous state made of the polylactic acid resin composition. In the present specification, the average molecular weight of the nonionic surfactant can be obtained in accordance with a method described in Examples set forth below.

Accordingly, the compound represented by the formula (1), when $R^1$ is an alkyl group having from 8 to 22 carbon atoms or an acyl group having from 8 to 22 carbon atoms in total, is:

<1> preferably a compound in which $R^1$ is an alkyl group having from 8 to 22 carbon atoms or an acyl group having from 8 to 22 carbon atoms in total; $R^2$ is a hydrogen atom, an alkyl group having from 1 to 4 carbon atoms, or an acyl group having from 2 to 4 carbon atoms in total; $A^1$ is an alkylene group having 2 or 3 carbon atoms; and p is the number showing an average number of moles of oxyalkylene groups added that satisfies $0 < p \leq 300$, wherein p number of oxyalkylene groups represented by ($A^1O$) may be identical or different, and the repeating units, when different, may be either in a block form or a random form;
<2> more preferably a compound in which $R^1$ is an alkyl group having from 8 to 22 carbon atoms or an acyl group having from 8 to 22 carbon atoms in total; $R^2$ is a hydrogen atom or an alkyl group having from 1 to 4 carbon atoms; $A^1$ is an alkylene group having 2 or 3 carbon atoms; and p is the number showing an average number of moles of oxyalkylene groups added that satisfies $2 \leq p \leq 50$, wherein p number of oxyalkylene groups represented by ($A^1O$) may be identical or different, and the repeating units, when different, may be either in a block form or a random form;
<3> even more preferably a compound in which $R^1$ is an alkyl group having from 8 to 22 carbon atoms or an acyl group having from 8 to 22 carbon atoms in total; $R^2$ is a hydrogen atom or a methyl group; $A^1$ is an alkylene group having 2 or 3 carbon atoms; and p is the number showing an average number of moles of oxyalkylene groups added that satisfies $2 \leq p \leq 50$, wherein p number of oxyalkylene groups represented by ($A^1O$) may be identical or different, and the repeating units, when different, may be either in a block form or a random form;
<4> even more preferably a compound in which $R^1$ is a saturated or unsaturated acyl group having from 8 to 22 carbon atoms in total; $R^2$ is a hydrogen atom; $A^1$ is an alkylene group having 2 or 3 carbon atoms; and p is the number showing an average number of moles of oxyalkylene groups added that satisfies $2 \leq p \leq 50$, wherein p number of oxyalkylene groups represented by ($A^1O$) may be identical or different, and the repeating units, when different, may be either in a block form or a random form;
<5> even more preferably a compound in which $R^1$ is a saturated or unsaturated acyl group having from 10 to 18 carbon atoms in total; $R^2$ is a hydrogen atom; $A^1$ is an alkylene group having 2 or 3 carbon atoms; and p is the number showing an average number of moles of oxyalkylene groups added that satisfies $2 \leq p \leq 50$, wherein p number of oxyalkylene groups represented by ($A^1O$) may be identical or different, and the repeating units, when different, may be either in a block form or a random form; and
<6> even more preferably a compound in which $R^1$ is a saturated or unsaturated acyl group having from 10 to 18 carbon atoms in total; $R^2$ is a hydrogen atom; $A^1$ is an alkylene group having 2 or 3 carbon atoms; and p is the number showing an average number of moles of oxyalkylene groups added that satisfies $5 \leq p \leq 20$, wherein p number of oxyalkylene groups represented by ($A^1O$) may be identical or different, and the repeating units, when different, may be either in a block form or a random form.

In addition, the compound represented by the formula (1), when $R^1$ is a hydrogen atom, is:

<1> preferably a compound in which $R^1$ is a hydrogen atom; $R^2$ is a hydrogen atom, an alkyl group having from 1 to 4 carbon atoms, or an acyl group having from 2 to 4 carbon atoms in total; $A^1$ is an alkylene group having 2 or 3 carbon atoms; and p is the number showing an average number of moles of oxyalkylene groups added that satisfies $0 < p \leq 300$, wherein p number of oxyalkylene groups represented by ($A^1O$) may be identical or different, and the repeating units, when different, may be either in a block form or a random form;
<2> more preferably a compound in which $R^1$ is a hydrogen atom; $R^2$ is a hydrogen atom; $A^1$ is an alkylene group having 2 or 3 carbon atoms; and p is the number showing an average number of moles of oxyalkylene groups added that satisfies $10 \leq p \leq 200$, wherein p number of oxyalkylene groups represented by ($A^1O$) may be identical or different, and the repeating units, when different, may be either in a block form or a random form;
<3> even more preferably a compound in which $R^1$ is a hydrogen atom; $R^2$ is a hydrogen atom; $A^1$ is an alkylene group having 2 or 3 carbon atoms; and p is the number showing an average number of moles of oxyalkylene groups added that satisfies $10 \leq p \leq 200$, wherein p number of oxyalkylene groups represented by ($A^1O$) is non-identical, and the repeating units are in block forms of polyoxypropylene-polyoxyethylene-polyoxypropylene or polyoxyethylene-polyoxypropylene-polyoxyethylene, and p' constituting each of the block units is the number that satisfies $5 \leq p' \leq 80$;

<4> even more preferably a compound in which $R^1$ is a hydrogen atom; $R^2$ is a hydrogen atom; $A^1$ is an alkylene group having 2 or 3 carbon atoms; and p is the number showing an average number of moles of oxyalkylene groups added that satisfies $10 \leq p \leq 200$, wherein p number of oxyalkylene groups represented by ($A^1O$) is non-identical, and the repeating units are in block forms of polyoxypropylene-polyoxyethylene-polyoxypropylene, and p' constituting each of the block units is the number that satisfies $5 \leq p' \leq 80$, wherein the polyoxyethylene EO and the polyoxypropylene PO are in a weight ratio EO/PO of from 5/95 to 70/30; and

<5> even more preferably a compound in which $R^1$ is a hydrogen atom; $R^2$ is a hydrogen atom; $A^1$ is an alkylene group having 2 or 3 carbon atoms; and p is the number showing an average number of moles of oxyalkylene groups added that satisfies $20 \leq p \leq 100$, wherein p number of oxyalkylene groups represented by ($A^1O$) is non-identical, and the repeating units are in block forms of polyoxypropylene-polyoxyethylene-polyoxypropylene, and p' constituting each of the block units is the number that satisfies $5 \leq p' \leq 60$, wherein the polyoxyethylene EO and the polyoxypropylene PO are in a weight ratio EO/PO of from 5/95 to 70/30.

Specific examples of the compound represented by the formula (1) include, for example, mono- or diether compounds obtained from aliphatic alcohols having from 8 to 22 carbon atoms and a polyoxyethylene glycol or polyoxypropylene glycol, or mono- or diester compounds obtained from fatty acids having from 8 to 22 carbon atoms and a polyoxyethylene glycol or polyoxypropylene glycol, and methyl ether compounds thereof. Fatty acid esters of polyethylene glycol and esters obtained from fatty acids and methyl polyglycol are preferred, and esters obtained from long-chained fatty acids such as oleic acid and a polyglycol are more preferred, from the viewpoint of improving flexibility, and compatibility with the carboxylic acid ester represented by the formula (4) and/or the carboxylic acid ester represented by the formula (5).

The compound represented by the formula (1) may be a commercially available product, or a compound synthesized in accordance with a known production method may be used. Preferred commercially available products include, for example, a fatty acid polyoxyethylene glycol ester, e.g., one manufactured by Kao Corporation, EMANON Series such as "EMANON 4110". In addition, other preferred examples include a polymeric nonionic surfactant a polyoxyethylene-polyoxypropylene copolymer, e.g., one manufactured by ADEKA, under the trade name of ADEKA Pluronic, Nonion Series. A compound in which propylene oxide is subjected to addition polymerization to both terminals of the polyoxyethylene glycol, which is a so-called reverse block form of ADEKA Pluronic Nonion, is more preferred, from the viewpoint of transparency, compatibility and fluidity. Specific examples of the preferred commercially available products include, for example, one manufactured by ADEKA under the trade names of ADEKA Pluronic 25R-2, 25R-1, and the like.

In the present invention, other surfactants that are known aside from the nonionic surfactant represented by the formula (1) can be used within the range that would not impair of the effects of the present invention. The kinds of the surfactants are not particularly limited, and it is preferable to use a surfactant aside from an ionic surfactant, from the viewpoint of avoiding the degradation of the polylactic acid resin during kneading.

In addition, the nonionic surfactant represented by the formula (1) is contained in the polylactic acid resin composition of the present invention in an amount of preferably from 0.1 to 10 parts by weight, more preferably from 0.1 to 5 parts by weight, and even more preferably from 0.1 to 3 parts by weight, based on 100 parts by weight of the polylactic acid resin, from the viewpoint of improving secondary formability and bleeding resistance. When the nonionic surfactant is contained in an amount of 0.1 parts by weight or more, secondary formability would be favorable, and when the nonionic surfactant is contained in an amount of 10 parts by weight or less, bleeding resistance can be favorable.

Furthermore, the nonionic surfactant represented by the formula (1) is in an amount of preferably from 1 to 50 parts by weight, more preferably from 5 to 50 parts by weight, and even more preferably from 5 to 45 parts by weight, based on 100 parts by weight of a total amount of the plasticizer represented by the formula (4) and the plasticizer represented by the formula (5), in order not to impair an effect of flexibility of the plasticizer represented by the formula (4) and the plasticizer represented by the formula (5).

(Crystal Nucleating Agent)

The crystal nucleating agent in the present invention is a compound represented by formula (2):

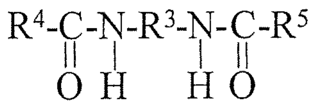

(2)

wherein $R^3$ is an alkylene group having from 1 to 10 carbon atoms; and $R^4$ and $R^5$ are a linear or branched alkyl group

having from 5 to 21 carbon atoms, which may have a substituent, that may be identical or different, and/or a crystal nucleating agent represented by the formula (3):

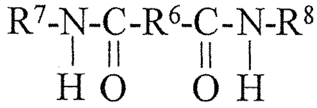 (3)

wherein $R^6$ is an alkylene group having from 1 to 10 carbon atoms; and $R^7$ and $R^8$ are a linear or branched alkyl group having from 6 to 22 carbon atoms, which may have a substituent, that may be identical or different.

The compound represented by the formula (2) has an effect of producing crystal nuclei of the polylactic acid resin in a vast number, and consequently the polylactic acid resin is formed into fine crystals, and whereby an effect of improving transparency is exhibited.

$R^3$ in the formula (2) is an alkylene group having from 1 to 10 carbon atoms, and the alkyl group may be linear or branched. Specific examples include an ethylene group, a propylene group, a tetramethylene group, a hexamethylene group, a metaxylylene group, and the like. Among them, an ethylene group, a hexamethylene group, or a metaxylylene group is preferred, and an ethylene group is more preferred, from the viewpoint of improving transparency of the polylactic acid resin composition.

$R^4$ and $R^5$ in the formula (2) are a linear or branched alkyl group having from 5 to 21 carbon atoms, which may have a substituent, and the alkyl group may be saturated or unsaturated, that may be identical or different. The substituent for $R^4$ and $R^5$ includes a hydroxyl group and the like. Specific examples of $R^4$ and $R^5$ are illustrated by a heptyl group, a nonyl group, an undecyl group, a tridecyl group, a pentadecyl group, a heptadecyl group, a heneicosyl group, a heptadecyl group, a 11-hydroxypentadecyl group, and the like. Among them, an undecyl group, a tridecyl group, a pentadecyl group, a heptadecyl group, a heptadecyl group, and a 11-hydroxypentadecyl group are preferred, and a 11-hydroxypentadecyl group is more preferred, from the viewpoint of improving transparency of the polylactic acid resin composition.

Accordingly, the compound represented by the formula (2) is:

<1> preferably a compound in which $R^3$ is an alkylene group having from 1 to 10 carbon atoms; and $R^4$ and $R^5$ are a linear or branched alkyl group having from 5 to 21 carbon atoms, which may have a substituent, that may be identical or different;

<2> more preferably a compound in which $R^3$ is an ethylene group, a hexamethylene group, or a metaxylylene group; and $R^4$ and $R^5$ are an undecyl group, a tridecyl group, a pentadecyl group, a heptadecyl group, a heptadecyl group, or a 11-hydroxypentadecyl group, that may be identical or different; and

<3> even more preferably a compound in which $R^3$ is an ethylene group; and both of $R^4$ and $R^5$ are a 11-hydroxypentadecyl group.

Specific examples of the compound represented by the formula (2) include diamides obtained from fatty acids which may have a substituent, that have from 8 to 22 carbon atoms in total, and diamines, such as ethylenediamine, 1,3-propanediamine, 1,4-butanediamine, 1,5-pentanediamine, 1,6-hexanediamine, or m-xylenediamine. Among them, ethylenebis fatty acid amides, propylenebis fatty acid amides, butylenebis fatty acid amides, hexamethylenebis fatty acid amides, and metaxylenebis fatty acid amides are preferred, ethylenebis palmitamide, ethylenebis stearamide, ethylenebis oleamide, ethylenebis 12-hydroxystearamide, hexamethylenebis 12-hydroxystearamide, and metaxylenebis 12-hydroxystearamide are more preferred, and ethylenebis oleamide, ethylenebis 12-hydroxystearamide, hexamethylenebis 12-hydroxystearamide, and metaxylenebis 12-hydroxystearamide are even more preferred, from the viewpoint of improving transparency of the polylactic acid resin composition.

The compound represented by the formula (3) has an effect of producing crystal nuclei of the polylactic acid resin in a vast number, and consequently the polylactic acid resin is formed into fine crystals, and whereby an effect of improving transparency is exhibited.

$R^6$ in the formula (3) is an alkylene group having from 1 to 10 carbon atoms, and the alkylene group may be linear or branched. Specific examples of the alkylene group are illustrated by an ethylene group, a propylene group, a tetramethylene group, a hexamethylene group, an octamethylene group, and the like. Among them, an ethylene group, a tetramethylene group, and an octamethylene group are preferred, and an ethylene group and a tetramethylene group are more preferred, from the viewpoint of improving transparency of the polylactic acid resin composition.

$R^7$ and $R^8$ in the formula (3) are a linear or branched alkyl group having from 6 to 22 carbon atoms, which may have a substituent, and the alkyl group may be saturated or unsaturated, that may be identical or different. Also, the substituent for $R^7$ and $R^8$ includes a hydroxyl group and the like. Specific examples of $R^7$ and $R^8$ are exemplified by an octyl group, a decyl group, a dodecyl group, a tetradecyl group, a hexadecyl group, an octadecyl group, a docosyl group,

an octadecyl group, a 12-hydroxyoctadecyl group, and the like. Among them, a dodecyl group, a tetradecyl group, a hexadecyl group, an octadecyl group, an octadecyl group, and a 12-hydroxyoctadecyl group are preferred, and a hexadecyl group, an octadecyl group, an octadecyl group, and a 12-hydroxyoctadecyl group are more preferred, from the viewpoint of improving transparency of the polylactic acid resin composition.

Accordingly, the compound represented by the formula (3) is:

<1> preferably a compound in which $R^6$ is an alkylene group having from 1 to 10 carbon atoms; and $R^7$ and $R^8$ are a linear or branched alkyl group having from 6 to 22 carbon atoms, which may have a substituent, that may be identical or different;

<2> more preferably a compound in which $R^6$ is an ethylene group, a tetramethylene group, or an octamethylene group; and $R^7$ and $R^8$ are a dodecyl group, a tetradecyl group, a hexadecyl group, an octadecyl group, an octadecyl group, or a 12-hydroxyoctadecyl group, that may be identical or different; and

<3> even more preferably a compound in which $R^6$ is an ethylene group or a tetramethylene group; and $R^7$ and $R^8$ are a hexadecyl group, an octadecyl group, an octadecyl group, or a 12-hydroxyoctadecyl group, that may be identical or different.

Specific examples of the compound represented by the formula (3) include diamides obtained from an aliphatic monoamine having from 6 to 22 carbon atoms, which may have a substituent, and a dicarboxylic acid, such as succinic acid, glutaric acid, adipic acid, or sebacic acid. Among them, palmitylbis succinamide, stearylbis succinamide, oleylbis succinamide, 12-hydroxystearylbis succinamide, palmitylbis adipamide, stearylbis adipamide, oleylbis adipamide, and 12-hydroxystearylbis adipamide are preferred, and palmitylbis succinamide, stearylbis succinamide, oleylbis succinamide, and 12-hydroxystearylbis succinamide are more preferred, from the viewpoint of improving transparency of the polylactic acid resin composition.

In addition, among the compound represented by the formula (2) and the compound represented by the formula (3), the bisamides represented by the formula (2) are preferred, from the viewpoint of improving transparency of the polylactic acid resin composition.

The compound represented by the formula (2) and the compound represented by the formula (3) may be a commercially available product, or a compound synthesized in accordance with a known production method.

In the present invention, other crystal nucleating agents that are known aside from the crystal nucleating agent represented by the formula (2) and/or the crystal nucleating agent represented by the formula (3) can be used, within the range that would not impair the effects of the present invention. Other crystal nucleating agents are exemplified by natural or synthetic silicate compounds, metal salts such as titanium oxide, barium sulfate, calcium tripolyphosphate, calcium carbonate, and sodium phosphate, inorganic compounds such as kaolinite, halloysite, talc, smectite, vermiculite, and mica, and metal salts of phenylphosphonic acid, and the like. These other crystal nucleating agents are contained in an amount of preferably 1 part by weight or less, and more preferably 0.5 parts by weight or less, based on 100 parts by weight of the polylactic acid resin, from the viewpoint of not hampering the effects of the present invention. The crystal nucleating agent represented by the formula (2) and/or the crystal nucleating agent represented by the formula (3) is contained in the entire crystal nucleating agents in an amount of preferably 60% by weight or more, more preferably 80% by weight or more, and even more preferably substantially 100% by weight, from the viewpoint of improving transparency of the polylactic acid resin composition. Here, the amount of the crystal nucleating agent represented by the formula (2) and/or the crystal nucleating agent represented by the formula (3) contained means a total amount of the crystal nucleating agent represented by the formula (2) and the crystal nucleating agent represented by the formula (3) contained in the composition, and the entire crystal nucleating agents mean a combined mixture of the crystal nucleating agent represented by the formula (2), the crystal nucleating agent represented by the formula (3), and other crystal nucleating agents.

In addition, the crystal nucleating agent represented by the formula (2) and/or the crystal nucleating agent represented by the formula (3) is contained in the polylactic acid resin composition of the present invention in an amount of preferably from 0.01 to 3 parts by weight, more preferably from 0.01 to 2 parts by weight, and even more preferably from 0.01 to 1 part by weight, based on 100 parts by weight of the polylactic acid resin, from the viewpoint of improving compatibility to the polylactic acid resin and transparency. When the amount is 0.01 parts by weight or more, the transparency of the polylactic acid resin composition becomes favorable, and when the amount is 3 parts by weight or less, the compatibility to the polylactic acid resin can be maintained, so that the transparency can be made favorable.

Furthermore, the crystal nucleating agent represented by the formula (2) and/or the crystal nucleating agent represented by the formula (3) is in an amount of preferably from 0.5 to 50 parts by weight, more preferably from 0.5 to 30 parts by weight, even more preferably from 1.0 to 20 parts by weight, and still even more preferably from 2 to 10 parts by weight, based on 100 parts by weight of a total amount of the plasticizer represented by the formula (4) and the plasticizer represented by the formula (5), in order not to impair the effects of flexibility of the plasticizer represented by the formula (4) and the plasticizer represented by the formula (5).

In the present invention, the plasticizer represented by the formula (4) and/or the plasticizer represented by the formula (5), the nonionic surfactant represented by the formula (1), and the crystal nucleating agent represented by the formula (2) and/or the crystal nucleating agent represented by the formula (3) are used in combination; therefore, transparency in the thermoforming and sufficient thermoformability, i.e. a widened temperature range that can satisfy both forming property and crystallization, can be realized. It is deduced that this is realized because the nonionic surfactant represented by the formula (1) has favorable affinity to and dispersibility with the polylactic acid resin and the crystal nucleating agent, so that dispersibility of each is improved, thereby exhibiting the effects mentioned above.

(Polylactic Acid Resin)

The polylactic acid resin in the present invention refers to a polylactic acid, or a copolymer of a lactic acid and a hydroxycarboxylic acid. The hydroxycarboxylic acid includes glycolic acid, hydroxybutyric acid, hydroxyvaleric acid, hydroxypentanoic acid, hydroxycaproic acid, hydroxyheptanoic acid, and the like, and glycolic acid and hydroxycaproic acid are preferred.

Preferred molecular structures of the polylactic acid are those composed of from 80 to 100% by mol of either unit of L-lactic acid (L-form) or D-lactic acid (D-form), and from 0 to 20% by mol of a lactic acid unit in a symmetric form thereof. In addition, the copolymer of a lactic acid and a hydroxycarboxylic acid is composed of from 85 to 100% by mol of either unit of L-lactic acid or D-lactic acid, and from 0 to 15% by mol of a hydroxycarboxylic acid unit.

These polylactic acid resins can be obtained by selecting a structure that is needed from L-lactic acid, D-lactic acid, and a hydroxycarboxylic acid as raw materials, and subjecting the components to dehydration polycondensation. Preferably, the polylactic acid resin can be obtained by selecting a structure that is needed from a lactide, which is a cyclic lactic acid dimer, a glycolide, which is a cyclic glycolic acid dimer, a caprolactone, or the like, and subjecting the components to a ring-opening polymerization. The lactides include the form of L-lactide, which is a cyclic L-lactic acid dimer; D-lactide, which is a cyclic D-lactic acid dimer; *meso*-lactide, which is a cyclic dimer of D-lactic acid and L-lactic acid; and DL-lactide, which is a racemic mixture of the D-lactide and the L-lactide. In the present invention, any one of the lactides can be used, and the D-lactide or the L-lactide is preferred as the main raw material.

In the present invention, it is preferable to use a polylactic acid resin having a high optical purity of the lactic acid component, from the viewpoint of improving formability of the polylactic acid resin composition. Specifically, L-form or D-form is contained in an amount of preferably 80% or more, L-form or D-form is contained in an amount of more preferably 90% or more, L-form or D-form is contained in an amount of even more preferably 95% or more, L-form or D-form is contained in an amount of even more preferably 98% or more, and L-form or D-form is contained in an amount of even more preferably 99% or more, of the entire lactic acid component of the polylactic acid resin.

In addition, in the present invention, as the polylactic acid, a stereocomplex polylactic acid, composed of two kinds of polylactic acids, each obtained from a lactic acid component containing an isomer different from one another as a main component, may be used, from the viewpoint of improving formability and transparency of the polylactic acid resin composition, satisfying both strength and impact resistance of the formed article made of the polylactic acid resin composition, and improving heat resistance. One polylactic acid constituting the stereocomplex polylactic acid [hereinafter referred to as "polylactic acid (A)"] contains L-form in an amount of from 90 to 100% by mol, and other component including D-form in an amount of from 0 to 10% by mol. The other polylactic acid [hereinafter referred to as "polylactic acid (B)"] contains D-form in an amount of from 90 to 100% by mol, and other component including L-form in an amount of from 0 to 10% by mol. Other components besides L-form and the D-form include dicarboxylic acids, polyhydric alcohols, hydroxycarboxylic acids, lactone, and the like, each having a functional group capable of forming two or more ester bonds. Also, other components may be a polyester, a polyether, a polycarbonate, or the like, each having two or more unreacted functional groups mentioned above in one molecule.

The polylactic acid (A) and the polylactic acid (B) in the stereocomplex polylactic acid are in a weight ratio, i.e. polylactic acid (A)/polylactic acid (B), of preferably from 10/90 to 90/10, more preferably from 20/80 to 80/20, and even more preferably from 40/60 to 60/40.

The polylactic acid resin has a weight-average molecular weight of preferably 100,000 or more, from the viewpoint of improving mechanical properties of the formed article made of the polylactic acid resin composition and lowering the melting tension during the extrusion molding, and the polylactic acid resin has a weight-average molecular weight of preferably 400,000 or less, from the viewpoint of improving fluidity during the molding of the polylactic acid resin composition. Here, the weight-average molecular weight of the polylactic acid resin can be obtained by using gel permeation chromatography (GPC), in which chloroform is used as a solvent, a high-temperature SEC column (GMHHR-H Series) manufactured by Tosoh Corporation as a column, a flow rate of 1.0 mL/min, a column temperature of 40°C, a differential refractive index detector (RI) as a detector, and calculating using styrene having a known molecular weight as a reference.

Here, the polylactic acid resin includes commercially available products, including for example, those manufactured by Mitsui Chemicals, Inc. under the trade names of LACEA H-100, H-280, H-400, H-440, etc., and those

manufactured by Nature Works under the trade names of Nature Works PLA/NW3001D, NW4032D etc.; and polylactic acids synthesized from lactic acid or lactide. A polylactic acid having an optical purity of 90% or more is preferred, from the viewpoint of improving strength and heat resistance. For example, a polylactic acid having a relatively high molecular weight and a high optical purity, the one manufactured by Nature Works under the trade name of NW4032D etc. is preferred.

Accordingly, the embodiments of the polylactic acid resin composition of the present invention includes the following embodiments:

<1> an embodiment containing a polylactic acid resin, a plasticizer containing a carboxylic acid ester represented by the formula (4) and/or a carboxylic acid ester represented by the formula (5), a nonionic surfactant represented by the formula (1), and a crystal nucleating agent represented by the formula (2) and/or a crystal nucleating agent represented by the formula (3);
<2> an embodiment containing a polylactic acid resin, a plasticizer containing a carboxylic acid ester represented by the formula (4), a nonionic surfactant represented by the formula (1), and a crystal nucleating agent represented by the formula (2);
<3> an embodiment containing a polylactic acid resin, a plasticizer containing a carboxylic acid ester represented by the formula (4), a nonionic surfactant represented by the formula (1), and a crystal nucleating agent represented by the formula (3);
<4> an embodiment containing a polylactic acid resin, a plasticizer containing a carboxylic acid ester represented by the formula (4), a nonionic surfactant represented by the formula (1), and a crystal nucleating agent represented by the formula (2) and a crystal nucleating agent represented by the formula (3);
<5> an embodiment containing a polylactic acid resin, a plasticizer containing a carboxylic acid ester represented by the formula (5), a nonionic surfactant represented by the formula (1), and a crystal nucleating agent represented by the formula (2);
<6> an embodiment containing a polylactic acid resin, a plasticizer containing a carboxylic acid ester represented by the formula (5), a nonionic surfactant represented by the formula (1), and a crystal nucleating agent represented by the formula (3);
<7> an embodiment containing a polylactic acid resin, a plasticizer containing a carboxylic acid ester represented by the formula (5), a nonionic surfactant represented by the formula (1), and a crystal nucleating agent represented by the formula (2) and a crystal nucleating agent represented by the formula (3);
<8> an embodiment containing a polylactic acid resin, a plasticizer containing a carboxylic acid ester represented by the formula (4) and a carboxylic acid ester represented by the formula (5), a nonionic surfactant represented by the formula (1), and a crystal nucleating agent represented by the formula (2);
<9> an embodiment containing a polylactic acid resin, a plasticizer containing a carboxylic acid ester represented by the formula (4) and a carboxylic acid ester represented by the formula (5), a nonionic surfactant represented by the formula (1), and a crystal nucleating agent represented by the formula (3); and
<10> an embodiment containing a polylactic acid resin, a plasticizer containing a carboxylic acid ester represented by the formula (4) and a carboxylic acid ester represented by the formula (5), a nonionic surfactant represented by the formula (1), and a crystal nucleating agent represented by the formula (2) and a crystal nucleating agent represented by the formula (3).

Among them, preferred examples include, for example,

<11> an embodiment containing a polylactic acid resin, a plasticizer containing a carboxylic acid ester represented by the formula (4), a nonionic surfactant represented by the formula (1), and a crystal nucleating agent represented by the formula (2),
wherein the compound represented by the formula (1) is a compound where $R^1$ is a saturated or unsaturated acyl group having from 10 to 18 carbon atoms in total, $R^2$ is a hydrogen atom, $A^1$ is an alkylene group having 2 or 3 carbon atoms, p is the number showing an average number of moles of oxyalkylene groups added that satisfies $5 \leq p \leq 20$, wherein p number of oxyalkylene group represented by ($A^1O$) may be identical or different, and the repeating units, when different, may be either in a block form or a random form; and
<12> an embodiment containing a polylactic acid resin, a plasticizer containing a carboxylic acid ester represented by the formula (4), a nonionic surfactant represented by the formula (1), and a crystal nucleating agent represented by the formula (2),
wherein the compound represented by the formula (1) is a compound where $R^1$ is a hydrogen atom, $R^2$ is a hydrogen atom, $A^1$ is an alkylene group having 2 or 3 carbon atoms, p is the number showing an average number of moles of oxyalkylene groups added that satisfies $20 \leq p \leq 100$, wherein p number of oxyalkylene group represented by ($A^1O$) may be non-identical, the repeating units are in block forms of polyoxypropylene-polyoxyethylene-polyoxypropylene, and p' constituting each of the block units is the number that satisfies $5 \leq p' \leq 60$, wherein the polyoxyethylene EO and the polyoxypropylene PO are in a weight ratio EO/PO of preferably from 5/95 to 70/30.

In addition, the polylactic acid resin composition of the present invention can further contain a hydrolysis inhibitor, in addition to a polylactic acid resin, a plasticizer containing a carboxylic acid ester represented by the formula (4) and/or a carboxylic acid ester represented by the formula (5), a nonionic surfactant represented by the formula (1), and a crystal nucleating agent represented by the formula (2) and/or a crystal nucleating agent represented by the formula (3) contained therein. Specifically, one embodiment of the polylactic acid resin composition of the present invention includes a composition containing a polylactic acid resin, a plasticizer containing a carboxylic acid ester represented by the formula (4) and/or a carboxylic acid ester represented by the formula (5), a nonionic surfactant represented by the formula (1), a crystal nucleating agent represented by the formula (2) and/or a crystal nucleating agent represented by the formula (3), and a hydrolysis inhibitor. More particularly, other embodiments of the polylactic acid resin composition include, for example, the following embodiments:

<1'> an embodiment containing a polylactic acid resin, a plasticizer containing a carboxylic acid ester represented by the formula (4) and/or a carboxylic acid ester represented by the formula (5), a nonionic surfactant represented by the formula (1), a crystal nucleating agent represented by the formula (2) and/or a crystal nucleating agent represented by the formula (3), and a hydrolysis inhibitor;
<2'> an embodiment containing a polylactic acid resin, a plasticizer containing a carboxylic acid ester represented by the formula (4), a nonionic surfactant represented by the formula (1), a crystal nucleating agent represented by the formula (2), and a hydrolysis inhibitor;
<3'> an embodiment containing a polylactic acid resin, a plasticizer containing a carboxylic acid ester represented by the formula (4), a nonionic surfactant represented by the formula (1), a crystal nucleating agent represented by the formula (3), and a hydrolysis inhibitor;
<4'> an embodiment containing a polylactic acid resin, a plasticizer containing a carboxylic acid ester represented by the formula (4), a nonionic surfactant represented by the formula (1), a crystal nucleating agent represented by the formula (2) and a crystal nucleating agent represented by the formula (3), and a hydrolysis inhibitor;
<5'> an embodiment containing a polylactic acid resin, a plasticizer containing a carboxylic acid ester represented by the formula (5), a nonionic surfactant represented by the formula (1), a crystal nucleating agent represented by the formula (2), and a hydrolysis inhibitor;
<6'> an embodiment containing a polylactic acid resin, a plasticizer containing a carboxylic acid ester represented by the formula (5), a nonionic surfactant represented by the formula (1), a crystal nucleating agent represented by the formula (3), and a hydrolysis inhibitor;
<7'> an embodiment containing a polylactic acid resin, a plasticizer containing a carboxylic acid ester represented by the formula (5), a nonionic surfactant represented by the formula (1), a crystal nucleating agent represented by the formula (2) and a crystal nucleating agent represented by the formula (3), and a hydrolysis inhibitor;
<8'> an embodiment containing a polylactic acid resin, a plasticizer containing a carboxylic acid ester represented by the formula (4) and a carboxylic acid ester represented by the formula (5), a nonionic surfactant represented by the formula (1), a crystal nucleating agent represented by the formula (2), and a hydrolysis inhibitor;
<9'> an embodiment containing a polylactic acid resin, a plasticizer containing a carboxylic acid ester represented by the formula (4) and a carboxylic acid ester represented by the formula (5), a nonionic surfactant represented by the formula (1), a crystal nucleating agent represented by the formula (3), and a hydrolysis inhibitor; and
<10'> an embodiment containing a polylactic acid resin, a plasticizer containing a carboxylic acid ester represented by the formula (4) and a carboxylic acid ester represented by the formula (5), a nonionic surfactant represented by the formula (1), a crystal nucleating agent represented by the formula (2) and a crystal nucleating agent represented by the formula (3), and a hydrolysis inhibitor.

The hydrolysis inhibitor includes carbodiimide compounds such as polycarbodiimide compounds and monocarbodiimide compounds, and the polycarbodiimide compounds are preferred from the viewpoint of improving durability and impact resistance of the polylactic acid resin composition, and the monocarbodiimide compounds are preferred from the viewpoint of improving durability and formability (fluidity) of the polylactic acid resin composition. It is posnsible that the monocarbodiimide and the polycarbodiimide are used together, from the viewpoint of even more improving durability, impact resistance, and formability of the formed article made of the polylactic acid resin composition.
The polycarbodiimide compound includes poly(4,4'-diphenylmethanecarbodiimide), poly(4,4'-dicyclohexylmethanecarbodiimide), poly(1,3,5-triisopropylbenzene)polycarbodiimide, poly(1,3,5-triisopropylbenzene and 1,5-diisopropylbenzene)polycarbodiimide, and the like. The monocarbodiimide compound includes N,N'-di-2,6-diisopropylphenylcarbodiimide, and the like.
In order to satisfy durability, impact resistance, and formability of the formed article made of the polylactic acid

resin composition, the above-mentioned carbodiimide compounds may be used alone or in a combination of two or more kinds. In addition, as the poly(4,4'-dicyclohexylmethanecarbodiimide), Carbodilite LA-1 manufactured by Nisshin Boseki can be purchased and used; as the poly(1,3,5-triisopropylbenzene)polycarbodiimide and poly(1,3,5-triisopropylbenzene and 1,5-diisopropylbenzene)polycarbodiimide, Stabaxol P and Stabaxol P-100 manufactured by Rhein Chemie can be purchased and used; and as N,N'-di-2,6-diisopropylphenylcarbodiimide, Stabaxol 1 manufactured by Rhein Chemie can be purchased and used, respectively.

The hydrolysis inhibitor is contained in an amount of preferably from 0.05 to 3 parts by weight, and more preferably from 0.10 to 2 parts by weight, based on 100 parts by weight of the polylactic acid resin, from the viewpoint of improving transparency and formability of the formed article made of the polylactic acid resin composition.

The polylactic acid resin composition of the present invention may contain a core-shell shaped rubber, from the viewpoint of improving physical properties such as impact resistance and toughness. Specific examples thereof include (core: silicone/acrylic polymer, shell: methyl methacrylate polymer), (core: silicone/acrylic polymer, shell: methyl methacrylate/glycidyl methacrylate polymer), (core: butadiene/styrene polymer, shell: methyl methacrylate polymer), (core: acrylic polymer, shell: methyl methacrylate polymer), and the like. As a commercially available product, METABLEN S-2006, S-2100, S-2200, W-600A, manufactured by Mitsubishi Rayon, PARALOID BPM -500, manufactured by Rohm and Haas are preferred, from the viewpoint of improving transparency. The core-shell shaped rubber is contained in an amount of preferably from 1 to 30 parts by weight, and more preferably from 2 to 20 parts by weight, based on 100 parts by weight of the polylactic acid resin.

The polylactic acid resin composition of the present invention can contain, as other components besides those mentioned above, a filler including an inorganic filler or an organic filler, a flame retardant, an antioxidant, a lubricant such as a hydrocarbon-based wax or an anionic surfactant, an ultraviolet absorbent, an antistatic agent, an anti-clouding agent, a photostabilizer, a pigment, a mildewproof agent, a bactericidal agent, a blowing agent, or the like, within the range that would not impede the objective accomplishment of the present invention, in other words, within the range that would not hamper secondary formability such as thermoforming property. In addition, in the same manner, other polymeric materials and other resin compositions can also be added within the range that would not hamper the effects of the present invention.

The polylactic acid resin composition of the present invention can be prepared without particular limitations, so long as the resin composition contains a polylactic acid resin, a plasticizer containing a carboxylic acid ester represented by the formula (4) and/or a carboxylic acid ester represented by the formula (5), a nonionic surfactant represented by the formula (1), and a crystal nucleating agent represented by the formula (2) and/or a crystal nucleating agent represented by the formula (3). For example, the resin composition can be prepared by melt-kneading raw materials containing a polylactic acid resin, a plasticizer containing a carboxylic acid ester represented by the formula (4) and/or a carboxylic acid ester represented by the formula (5), a nonionic surfactant represented by the formula (1), and a crystal nucleating agent represented by the formula (2) and/or a crystal nucleating agent represented by the formula (3), and further optionally various additives with a known kneader such as a tightly closed kneader, a single-screw or twin-screw extruder, or an open roller kneader. Here, the raw materials can also be subjected to melt-kneading after homogeneously blending the components previously with a Henschel mixer, a super mixer or the like.

The melt-kneading temperature is preferably from 160° to 220°C, more preferably from 170° to 200°C, and even more preferably from 180° to 190°C, from the viewpoint of improving formability and inhibition of deterioration of the polylactic acid resin composition. The melt-kneading time cannot be unconditionally determined because the melt-kneading time depends upon the melt-kneading temperature and the kinds of the kneaders, and the melt-kneading time is preferably from 15 to 900 seconds.

The glass transition temperature Tg of the resulting melt-kneaded mixture cannot be unconditionally determined because the glass transition temperature depends upon the amounts of the compounds represented by the formulas (1) to (5), and other additives contained. The glass transition temperature is preferably from 30° to 60°C, more preferably from 30° to 55°C, and even more preferably from 35° to 55°C. In addition, in a case where a sheet in an amorphous state before subjecting to thermoforming is kept in storage or transported, the glass transition temperature is preferably from 40° to 58°C, and more preferably from 45° to 58°C, from the viewpoint of heat resistance of the amorphous sheet.

In addition, the crystallization temperature Tc cannot be unconditionally determined because the glass transition temperature depends upon the amounts of the compounds represented by the formulas (1) to (5), and other additives contained. The crystallization temperature is preferably from 50° to 110°C, more preferably from 50° to 100°C, and even more preferably from 60° to 90°C. Here, the glass transition temperature Tg and the crystallization temperature Tc of the polylactic acid resin composition as used herein can be measured with, for example, a DSC measurement apparatus. Specifically, as prescribed in JIS K 7121, a method includes a method of measurement with a measurement sample amount of 7.5 mg, under the temperature-elevation conditions of from 25° to 200°C at a rate of 15°C per minute.

Since the kneaded mixture thus obtained has excellent secondary formability such as thermoforming property, the present invention provides a formed article in an amorphous state or a semi-crystalline state, which can be formed into formed articles having excellent heat resistance, and the like, including for example, a sheet-like formed article.

Here, the amorphous state as used herein shows a state in which amorphous regions are present in sufficiently larger amounts as compared to crystalline regions, and specifically means a state in which a relative degree of crystallinity as obtained by a method of Test Example 5 described later is less than 60%, and a semi-crystalline state as used herein means a state in which a relative degree of crystallinity is from 60 to 80% as obtained by the same method. Accordingly, the formed article in the amorphous state or semi-crystalline state means a formed article having a relative degree of crystallinity of 80% or less.

The formed article in an amorphous state or semi-crystalline state can be prepared by, for example, extrusion molding or pressure forming, in a case where the polylactic acid resin composition of the present invention is formed into a sheet-like formed article.

The extrusion molding is carried out by melting a polylactic acid resin composition of the present invention filled in a heated extruder, thereafter extruding a molten composition from a T die, and immediately bringing this extruded sheet-like formed product into contact with a cooling roller to cool the sheet to a temperature equal to or lower than the Tg, removing the sheets from the cooling roller, and rolling over with a winding roller to be able to provide a sheet-like formed article.

The temperature of the extruder is preferably from 170° to 240°C, more preferably from 175° to 220°C, and even more preferably from 180° to 210°C, from the viewpoint of homogeneously mixing a polylactic acid resin composition and inhibiting the deterioration of the polylactic acid resin. Also, the temperature of the cooler roller is preferably 40°C or lower, more preferably 30°C or lower, and even more preferably 10°C or lower, from the viewpoint of obtaining a formed article in an amorphous state or a semi-crystalline state.

In addition, the extrusion rate is preferably from 1 to 200 m/minute, more preferably from 5 to 150 m/minute, and even more preferably from 10 to 100 m/minute, from the viewpoint of improving formability of the amorphous regions.

When a sheet-like formed article is formed by press forming, a formed article can be prepared by subjecting a polylactic acid resin composition of the present invention to a boxed press forming, with a frame having a sheet-like shape.

As the temperature and pressure of the press forming, when a formed article in an amorphous state or a semi-crystalline state is prepared, it is preferable that the press is carried out, for example, preferably under the conditions of a temperature of from 170° to 240°C and a pressure of from 5 to 30 MPa, more preferably under the conditions of a temperature of from 175° to 220°C and a pressure of from 10 to 25 MPa, and even more preferably under the conditions of a temperature of from 180° to 210°C and a pressure of from 10 to 20 MPa. The press time cannot be unconditionally determined because the time depends upon the temperature and pressure of the press. The press time is preferably from 1 to 10 minutes, more preferably from 2 to 8 minutes, and even more preferably from 3 to 6 minutes.

In addition, immediately after the press under the above conditions, it is preferable that the formed article is cooled by subjecting to press preferably under the conditions of a temperature of from 0° to 40°C and a pressure of from 5 to 30 MPa, more preferably under the conditions of a temperature of from 10° to 30°C and a pressure of from 10 to 25 MPa, and even more preferably under the conditions of a temperature of from 10° to 20°C and a pressure of from 10 to 20 MPa. The press time cannot be unconditionally determined because the press time depends upon the press temperature and pressure, and the press time is preferably from 10 seconds to 10 minutes, more preferably from 20 seconds to 10 minutes, and even more preferably from 30 seconds to 10 minutes, in order to sufficiently cool the polylactic acid resin composition of the present invention to make it into an amorphous state or a semi-crystalline state.

When a sheet-like formed article in an amorphous state or a semi-crystalline state is prepared, its thickness is preferably from 0.1 to 1.5 mm, more preferably from 0.2 to 1.4 mm, and even more preferably from 0.3 to 1.2 mm, from the viewpoint of obtaining a homogeneous formed article, which is a secondary formed product.

Since the sheet in an amorphous state or a semi-crystalline state thus obtained has a large thermoformable temperature range and favorable thermoformability, secondary forming is facilitated. Also, since the nonionic surfactant represented by the formula (1) has high affinity to the polylactic acid resin, the sheet has excellent bleeding resistance. Accordingly, the sheet in an amorphous state or a semi-crystalline state of the present invention is suitably used in applications for secondary forming.

In addition, in the present invention, a sheet in an amorphous state or a semi-crystalline state of the present invention is formed by, for example, setting the sheet inside a die using a vacuum pressure forming machine, and keeping inside the die in a pressed or non-pressed state, to thereby provide a formed article, which is a secondary formed product. Therefore, the present invention also provides a formed article obtainable by secondary forming of a sheet in an amorphous state or a semi-crystalline state of the present invention, which is a secondary formed product. In other words, the present invention provides a formed article obtained by vacuum forming or pressure forming a sheet obtained with a polylactic acid resin composition of the present invention, and a method for secondary forming of a sheet obtained with a polylactic acid resin composition of the present invention.

A formed article obtained by vacuum forming or pressure forming can be obtained by molding in accordance with a known method without particular limitation. For example, a formed article is obtained by heating a sheet in an amorphous state or a semi-crystalline state prepared as mentioned above with a vacuum pressure forming machine or the like to a temperature equal to or higher than Tg of the polylactic acid resin, and forming the sheet with a die into a

desired shape in a vacuum state.

The die temperature is preferably 120°C or lower, more preferably 115°C or lower, and even more preferably 110°C or lower, from the viewpoint of improving crystallization velocity and improving operability of the polylactic acid resin composition. In addition, the die temperature is preferably 70°C or higher, more preferably 75°C or higher, and even more preferably 80°C or higher. From the above viewpoint, the die temperature is preferably from 70° to 120°C, more preferably from 75° to 115°C, and even more preferably from 80° to 110°C.

The holding time inside the die in, for example a die at 80°C, is preferably from 2 to 60 seconds, more preferably from 3 to 30 seconds, and even more preferably 5 to 20 seconds, from the viewpoint of improving heat resistance and productivity of the formed article made of the polylactic acid resin composition. Since the polylactic acid resin composition of the present invention has a fast crystallization velocity, a formed article having sufficient heat resistance is obtained even with a holding time as short as that mentioned above.

The formed article thus obtained has excellent fittability because a sheet in an amorphous state or a semi-crystalline state of the present invention has favorable thermoforming property. In addition, since the formed article has an excellent flexibility effect by the compound represented by the formula (4) and/or the compound represented by the formula (5), the resulting film has a high crystallinity, and has excellent heat resistance and transparency.

Here, in the present invention, the sheet in an amorphous state or a semi-crystalline state obtained as mentioned above may be provided as a crystallized sheet by crystallizing the sheet while maintaining the sheet at a temperature of preferably from 60° to 120°C, and more preferably from 70° to 110°C.

The method for secondary forming of a sheet of the present invention obtained with the polylactic acid resin composition is not particularly limited, so long as the method is a method for preparing a formed article mentioned above including molding the sheet in a manner as described above.

The formed article of the present invention thus obtained has high crystallinity, and has excellent bleeding resistance, heat resistance and transparency, so that the formed article can be used in various industrial applications such as daily sundries, household electric appliance parts, packaging materials for household electric appliance parts, and automobile parts, and especially it is suitably used for various wrapping materials such as food wrappings.

## EXAMPLES

The present invention will be explained more specifically hereinbelow by showing Examples and Comparative Examples, without intending to limit the present invention to the Examples set forth below. Here, the room temperature refers to a temperature of from 15° to 30°C.

[Average Molecular Weights of Plasticizer and Nonionic Surfactant] The average molecular weight can be obtained by obtaining a saponification value in accordance with a method prescribed in JIS K0070, and calculating the average molecular weight according to the following formula:

$$\text{Average Molecular Weight} = 56{,}108 \times \frac{\text{Number of Ester Groups}}{\text{Saponification Value}}$$

### Production Example 1 of Plasticizer - Diester Obtained from Succinic Acid and Triethylene Glycol Monomethyl Ether

A 3-L flask equipped with a stirrer, a thermometer, and a dehydration tube was charged with 500 g of succinic anhydride, 2463 g of triethylene glycol monomethyl ether, and 9.5 g of paratoluenesulfonic acid monohydrate, and the contents were reacted at 110°C for 15 hours under a reduced pressure of from 4 to 10.7 kPa, while blowing nitrogen at 500 mL/min into a space portion. The liquid reaction mixture had an acid value of 1.6 KOH mg/g. To the liquid reaction mixture was added 27 g of an adsorbent KYOWAAD 500SH manufactured by Kyowa Chemical Industry Co., Ltd., and the mixture was stirred at 80°C and 2.7 kPa for 45 minutes, and filtered. Thereafter, triethylene glycol monomethyl ether was distilled off at a liquid temperature of from 115° to 200°C and a pressure of 0.03 kPa, and after cooling to 80°C, the residue was filtered under a reduced pressure, to provide a diester obtained from succinic acid and triethylene glycol monomethyl ether, i.e. $(MeEO_3)_2SA$, as a filtrate. The diester obtained had a weight-average molecular weight of 410, a viscosity at 23°C of 27 mPa•s, an acid value of 0.2 KOH mg/g, a saponification value of 274 KOH mg/g, a hydroxyl value of 1 KOH mg/g or less, and a hue APHA of 200.

### Production Example 2 of Plasticizer - Oligoester Obtained from Succinic Acid and Diethylene Glycol

A four-necked flask equipped with a stirrer, a thermometer, a dropping funnel, a distillation tube, and a nitrogen inlet tube was charged with 999 g (9.41 mol) of diethylene glycol, and 23.6 g of a 28% sodium methoxide-containing methanol solution (sodium methoxide: 0.122 mol), and methanol was distilled off while stirring the components at a

normal pressure, i.e. 101.3 kPa, and 120°C for 0.5 hours. Thereafter, while adding 4125 g (28.2 mol) of dimethyl succinate manufactured by Wako Pure Chemical Industries, Ltd. dropwise thereto over 3 hours to react, methanol generated by the reaction was distilled off at the same time. Next, methanol was distilled off at a pressure of from 50 to 760 mmHg and 75°C, 4.4 g of a 28% sodium methoxide-containing methanol solution (sodium methoxide: 0.023 mol) was then added to the residue, and methanol was distilled off at a pressure of from 22 to 760 mmHg and 100°C. Forty-one grams of KYOWAAD 600S manufactured by Kyowa Chemical Industry Co., Ltd. was added to the residue, the mixture was stirred at a pressure of 30 mmHg and 80°C for 1 hour, and thereafter subjected to filtration under a reduced pressure. The filtrate was heated at a pressure of 2 mmHg and 70° to 190°C to distill off unreacted dimethyl succinate, to provide an oligoester obtained from succinic acid and diethylene glycol, MeSA-DEG (t = 1.5).

Examples 1 to 18, Comparative Examples 1 to 8, and Reference Example 1

Raw materials listed in Tables 1 to 3 were used in amounts as listed in Tables 1 to 3, and kneaded with a twin-screw extruder HK-25D manufactured by PARKER at a kneading temperature of 180°C at a rotational speed of 90 rotations per minute for 10 minutes to prepare a polylactic acid resin composition.

Here, the raw materials in Tables 1 to 3 are as follows.

< Polylactic Acid Resin >

NW4032D: a polylactic acid resin, manufactured by Nature Works LLC, Nature Works 4032D, optical purity: 98.5%, melting point: 160°C, weight-average molecular weight: 180,000

< Plasticizer >

$(MeEO_3)_2SA$: a diester compound obtained from succinic acid and triethylene glycol monomethyl ether produced in Production Example 1 of Plasticizer mentioned above, average molecular weight: 410, a compound in the formula (4) where $R^9$ and $R^{10}$ are methyl groups, R is an ethylene group, $A^2$ is an ethylene group, m=3, and n=3

DAIFATTY-101: a diester obtained from adipic acid and a 1/1 mixture of diethylene glycol monomethyl ether / benzyl alcohol manufactured by DAIHACHI CHEMICAL INDUSTRY CO., LTD., average molecular weight: 338, a compound in the formula (4) where $R^9$ is a methyl group, $R^{10}$ is a benzyl group, R is a tetramethylene group, $A^2$ is an ethylene group, m=2, and n=0

MeSA-DEG (t = 1.5): an oligoester obtained from succinic acid and diethylene glycol produced in Production Example 2 of Plasticizer mentioned above, average molecular weight: 430, a compound in the formula (5) where $R^{11}$ is a methyl group, $R^{12}$ is an ethylene group, $R^{13}$ is an ethylene group, s=2, and t=1.5

< Nonionic Surfactant >

EMANON 4110: a monoester obtained from oleic acid and polyoxyethylene glycol, manufactured by Kao Corporation, average molecular weight: 680, a compound in the formula (1) where $R^1$ is an unsaturated acyl group derived from oleic acid, $R^2$ is a hydrogen atom, $A^1$ is an ethylene group, and p is 9

ADEKA Pluronic 25R-2: a polyoxyethylene-polypropylene copolymer, manufactured by ADEKA, average molecular weight: 3,500, a compound in the formula (1) where $R^1$ and $R^2$ are hydrogen atoms, $(A^1O)_p$ is a block form of polyoxypropylene-polyoxyethylene-polyoxypropylene, wherein a total number of p' of the polyoxypropylene groups is 47, a total number of p' of the polyoxyethylene groups is 16, and a grand total of the number of p in the formula (1) is 63

POEM J-0081HV: decaglycerol stearate, manufactured by RIKEN VITAMIN CO., LTD.

EMANON 1112: a monoester obtained from lauric acid and polyoxyethylene glycol, manufactured by Kao Corporation, average molecular weight: 685, a compound in the formula (1) where $R^1$ is an acyl group derived from lauric acid, $R^2$ is a hydrogen atom, $A^1$ is an ethylene group, and p is 11

ADEKA Pluronic 25R-1: a polyoxyethylene-polypropylene copolymer, manufactured by ADEKA, average molecular weight: 3,050, a compound in the formula (1) where $R^1$ and $R^2$ are a hydrogen atom, $(A^1O)_p$ is a block form of polyoxypropylene-polyoxyethylene-polyoxypropylene, wherein a total number of p' of the polyoxypropylene groups is 47, a total number of p' of the polyoxyethylene groups is 7, and a grand total of the number of p in the formula (1) is 54

Emalex GIS-120: polyoxyethylene glyceryl isostearate, EO: 20 mol, manufactured by Nihon Emulsion Co., Ltd.

< Crystal Nucleating Agent >

SLIPACKS H: ethylenebis 12-hydroxystearamide, manufactured by Nippon Kasei Chemical Co., Ltd., a compound in the formula (2) where $R^4$ and $R^5$ are a 11-hydroxypentadecyl group, and $R^3$ is an ethylene group Talc: MICRO ACE P-6 manufactured by Nippon Talc
SLIPACKS ZHH: hexamethylenebis 12-hydroxystearamide, manufactured by Nippon Kasei Chemical Co., Ltd., a compound in the formula (2) where $R^4$ and $R^5$ are 11-hydroxypentadecyl groups, and $R^3$ is a hexamethylene group
SLIPACKS 8: ethylenebis caprylamide, manufactured by Nippon Kasei Chemical Co., Ltd., a compound in the formula (2) where $R^4$ and $R^5$ are heptyl groups, and $R^3$ is an ethylene group
SLIPACKS O: ethylenebis caprylamide, manufactured by Nippon Kasei Chemical Co., Ltd., a compound in the formula (2) where $R^4$ and $R^5$ are a heptadecyl group, and $R^3$ is an ethylene group
NJSTAR TF-1: trimesic acid tricyclohexylamide, manufactured by New Japan Chemical Co., Ltd.

< Hydrolysis Inhibitor >

Carbodilite LA-1: polycarbodiimide, manufactured by Nisshin Boseki Chemical

<u>Preparation of Sheet in Amorphous State</u>

With respect to the resulting polylactic acid resin composition, the polylactic acid resin composition of a given amount of about 22 g was sandwiched using two pieces of metal plate, a ferro-plate, and a metallic spacer frame having a thickness of 0.4 mm and inner frame dimensions of 20 cm each side with a height of 1 cm at the center inside the frame. With an auto-press forming machine manufactured by Toyo Seiki, the polylactic acid resin composition was first pressed at a temperature and a pressure of 180°C and 4 MPa for 2 minutes, and further continued pressing at a temperature and a pressure of 180°C and 20 MPa for 2 minutes. Thereafter, the pressed composition was immediately rapidly cooled to room temperature to provide a sheet. The resulting sheet with a thickness of 0.4 mm was cut out into squares having dimensions of 15 cm × 15 cm.

<u>Preparation of Sheet in Crystalline State</u>

With respect to the resulting polylactic acid resin composition, the polylactic acid resin composition of a given amount of about 20 g was sandwiched using two pieces of metal plate, a ferro-plate, and a metallic spacer frame having a thickness of 0.4 mm and inner frame dimensions of 20 cm each side with a height of 1 cm at the center inside the frame. With an auto-press forming machine manufactured by Toyo Seiki, the polylactic acid resin composition was first pressed at a temperature and a pressure of 180°C and 4 MPa for 2 minutes, and further continued pressing at a temperature and a pressure of 180°C and 20 MPa for 2 minutes. Thereafter, the pressed composition was immediately rapidly cooled to room temperature to provide a sheet in an amorphous state. The resulting sheet was further pressed at a temperature and a pressure of 80°C and 10 MPa, allowed to cool in the air to room temperature, and taken out from the spacer frame to provide a sheet of a square with 20 cm each side.

The properties were evaluated for each of the resulting compositions and sheets in accordance with the following Test Examples 1 to 6. The results are shown in Tables 1 to 3.

<u>Test Example 1 < Evaluation of Bleeding Resistance ></u>

The sheet surface was visually observed for the crystalline sheets of each the compositions, and the presence or absence of bleed-out was confirmed. A case where bleed out was not confirmed at all was ranked "A"; a case where bleed-out was slightly confirmed was ranked "B"; and a case where bleed-out was confirmed in many instances was ranked "C." Incidentally, as to Reference Example 1, raw materials other than the polylactic acid resin were not used, and the bleed-out did not take place, so that evaluation was not carried out.

Test Example 2 < Evaluation of Fittability >

The fittability was evaluated as follows. With a single-step vacuum pressure forming machine manufactured by WAKISAKA Co., Ltd., FVS-500P WAKITEC, the above-mentioned cut-out sheet in an amorphous state was placed along the guide, and the sheet was heated while varying a holding time in the heater section in which a heater temperature was set to 400°C until the temperature of the sheet surface became a temperature as listed in Table 2. The sheet heated at each temperature was subjected to vacuum forming with upper and lower dies set at a temperature listed in each table, and the sheet was held in the die for 10 seconds, and a vacuum formed article, the lid, was taken out. The lid obtained as mentioned above was fitted to a body part having $\phi$ 81 mm, a height of 51 mm, and the material being made of PP-containing low-foamable PS, of a commercially available vessel under the trade name of SHINO Yunomi 90, manufactured by C P CHEMICAL INCORPORATED. A case where the lid could be easily fitted was ranked "A"; and other cases were ranked "B." As the temperature of the sheet surface, a surface temperature of the heated sheet was directly measured with a surface thermometer. The used die is shown in Figure 1.

Test Example 3 < Evaluation 1 of Heat Resistance >

In the above-mentioned evaluation of fittability, after a formed article that could be easily fitted was immersed in hot water at 80°C for 30 seconds, a case where no changes in fittability took place was ranked "A," and a case where fittability underwent large changes was ranked "B."

Test Example 4 < Evaluation of Transparency >

In the above-mentioned evaluation of fittability, a part of a formed article that could be easily fitted was cut out, and Haze values were measured with a Haze meter Model HM-150, manufactured by MURAKAMI COLOR RESEARCH LABORATORY CO., Ltd., and the Haze values were used as indexes for transparency. The smaller the values for Haze values, the more excellent the transparency.

Test Example 5 <Evaluation of Crystallinity >

Parts of the above-mentioned sheets in an amorphous state and the formed article that could be easily fitted in the above-mentioned evaluation of fittability were cut out, and a relative degree of crystallinity was obtained. Specifically, the temperature was raised at 15°C/min from 25° to 200°C with DSC manufactured by Perkin-Elmer, and a relative degree of crystallinity was calculated from the following formula:

$$\text{Relative Degree of Crystallinity, \%}=((\Delta Hm-\Delta Hc)/\ \Delta Hm)\times 100$$

wherein $\Delta$Hc is an absolute value of cold crystallization enthalpy peaks observed, and $\Delta$Hm is an absolute value of melt crystallization peaks observed.

Test Example 6 < Evaluation 2 of Heat Resistance >

From a sheet in an amorphous state, a sample of 12 cm $\times$ 12 cm was cut out, and guiding lines of 10 cm intervals in both length and width directions were drawn. In accordance with a method prescribed in JIS K 7133, each sample was allowed to stand constantly at each temperature for 24 hours, to measure each of thermal dimensional changes, i.e. heat-shrinkage rate. The heat-shrinkage rate was measured at each temperature of from 25° to 60°C with a 1°C increment, and a highest temperature at which a heat-shrinkage rate was 0.3% or less in a length or width direction, whichever higher, was evaluated for heat resistance of an amorphous sheet.

[Table 1]

Table 1

| | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Ref. Ex. 1 |
|---|---|---|---|---|---|---|---|---|---|---|---|---|
| Components | | | | | | | | | | | | |
| Polylactic Acid Resin | NW4032D | 100 | 100 | 100 | 100 | 100 | 100 | 100 | 100 | 100 | 100 | 100 |
| Plasticizer | $(MeEO_3)_2SA$ | 7.0 | 7.0 | 7.0 | 7.0 | - | - | 10.0 | 8.0 | 7.0 | 7.0 | - |
| | DAIFATTY-101 | - | - | - | - | 7.0 | - | - | - | - | - | - |
| | MeSA-DEG(t=1.5) | - | - | - | - | - | 7.0 | - | - | - | - | - |
| Nonionic Surfactant | EMANON 4110 | 1.0 | 1.0 | 3.0 | - | 1.0 | 1.0 | - | - | - | 1.0 | - |
| | ADEKA Pluronic 25R-2 | - | - | - | 0.5 | - | - | - | - | - | - | - |
| | POEM J-0081HV | - | - | - | - | - | - | - | - | 1.0 | - | - |
| Crystal Nucleating Agent | SLIPACKS H | 0.3 | 0.3 | 0.3 | 0.3 | 0.3 | 0.3 | 0.3 | 0.3 | 0.3 | - | - |
| | Talc | - | - | - | - | - | - | - | - | - | 0.3 | - |
| Hydrolysis Inhibitor | Carbodilite LA-1 | - | 0.5 | 0.5 | 0.5 | 0.5 | 0.5 | 0.5 | 0.5 | 0.5 | 0.5 | - |
| Amount of Nonionic Surfactant Used, Parts by Weight 1) | | 14.2 | 14.2 | 42.9 | 7,1 | 14.2 | 14.2 | - | - | 14.2 | 14.2 | - |
| Amount of Crystal Nucleating Agent Used, Parts by Weight2) | | 4.3 | 4.3 | 4.3 | 4.3 | 4.3 | 4.3 | 3.0 | 3.8 | 4.3 | 4.3 | - |
| Die Setting Temperature During Preparation of Vacuum Formed Article, °C | | 90 | 90 | 90 | 90 | 90 | 90 | 90 | 90 | 90 | 90 | 90 |
| Crystallinity of Amorphous Sheet - Relative Degree of Crystallinity, % | | 42 | 44 | 43 | 42 | 45 | 45 | 49 | 50 | 52 | 52 | 5 |
| Bleeding Resistance of Sheet in Crystalline State | | A | A | A | A | A | A | A | A | B | A | A |

(continued)

| | | | | | | | | | | | | | | |
|---|---|---|---|---|---|---|---|---|---|---|---|---|---|---|
| Vacuum Formed Article | | | | | | | | | | | | | | |
| Fittability | Sheet Surface Temperature, °C | 68 | B | B | B | B | B | B | B | B | B | B | B |
| | | 70 | B | B | A | B | B | B | B | B | B | B | B |
| | | 72 | A | B | A | B | B | B | B | B | B | B | B |
| | | 74 | A | B | A | B | B | B | A | B | | B | B |
| | | 76 | A | B | A | A | B | B | A | A | B | A | B |
| | | 78 | A | B | A | A | B | B | B | A | A | A | B |
| | | 80 | A | B | B | A | B | B | B | B | A | B | B |
| | | 82 | A | A | B | A | A | A | B | B | B | B | B |
| | | 84 | A | A | B | B | A | A | B | B | B | B | B |
| | | 86 | B | A | B | B | A | A | B | B | B | B | B |
| | | 88 | B | A | B | B | A | A | B | B | B | B | B |
| | | 90 | B | B | B | B | B | B | B | B | B | B | B |
| Heat Resistance | | | A | A | A | A | A | A | A | A | A | A | - |
| Transparency | | Haze, % Relative | 5.0 | 5.0 | 4.0 | 5.0 | 6.0 | 5.5 | 6.0 | 6.0 | 10.0 | 32.0 | - |
| Crystallinity | | Degree of Crystallinity | 100 | 100 | 100 | 100 | 100 | 100 | 100 | 100 | 100 | 100 | - |

* The amount of each of the raw materials used is expressed in an amount used (parts by weight) based on 100 parts by weight of the polylactic acid resin.
1) The amount of the non ionic surfactant used (parts by weight), based on 100 parts by weight of the plasticizer.
2) The amount of the crystal Nucleating agent used (parts by weight), based on 100 parts by weight of the plasticizer.

[Table 2]

Table 2

| | | | Ex. 7 | Ex. 8 | Ex. 9 | Ex. 10 | Ex. 11 | Comp. Ex. 5 |
|---|---|---|---|---|---|---|---|---|
| Components | | | | | | | | |
| Polylactic Acid Resin | NW4032D | | 100 | 100 | 100 | 100 | 100 | 100 |
| Plasticizer | $(MeEO_3)_2SA$ | | 7.0 | 7.0 | 5.0 | 4.0 | 4.0 | 8.0 |
| Nonionic Surfactant | EMANON 4110 | | 1.0 | - | - | | | - |
| | ADEKA Pluronic 25R-2 | | - | 1.0 | 1.0 | 1.0 | 1.0 | - |
| Crystal Nucleating Agent | SPLIPACKS H | | 0.2 | 0.2 | 0.2 | 0.2 | 0.3 | 0.2 |
| Hydrolysis Inhibitor | Carbodilite LA-1 | | 0.2 | 0.2 | 0.2 | 0.2 | 0.2 | 0.2 |
| Amount of Nonionic Surfactant Used, Parts by Weight[1)] | | | 14.2 | 14.2 | 20.0 | 25.0 | 25.0 | - |
| Amount of Crystal Nucleating Agent Used, Parts by Weight[2)] | | | 2.9 | 2.9 | 4.0 | 5.0 | 7.5 | 2.5 |
| Die Setting Temperature During Preparation of Vacuum Formed Article, °C | | | 90 | 90 | 95 | 95 | 95 | 90 |
| Crystallinity of Amorphous Sheet - Relative Degree of Crystallinity, % | | | 45 | 44 | 45 | 46 | 46 | 50 |
| Heat Resistance of Sheet in Amorphous State | | | 31 | 36 | 38 | 39 | 40 | 29 |
| Bleeding Resistance of Sheet in Crystalline State | | | A | A | A | A | A | A |
| Vacuum Formed Article | | | | | | | | |
| Fittability | Sheet Surface Temperature, °C | 68 | B | B | B | B | B | B |
| | | 70 | B | B | B | B | B | B |
| | | 72 | B | B | B | B | B | B |
| | | 74 | B | B | B | B | B | B |
| | | 76 | B | B | B | B | B | A |
| | | 78 | A | A | B | B | B | A |
| | | 80 | A | A | B | B | A | B |
| | | 82 | A | A | A | B | A | B |
| | | 84 | A | A | A | A | A | B |
| | | 86 | A | A | A | A | A | B |
| | | 88 | A | A | A | A | A | B |
| | | 90 | B | B | A | A | B | B |
| | | 92 | B | B | B | B | B | B |
| Heat Resistance | | | A | A | A | A | A | A |
| Transparency | | Haze, % Relative | 5.2 | 5.0 | 5.2 | 5.5 | 4.5 | 8.0 |

(continued)

| | | | | | | | |
|---|---|---|---|---|---|---|---|
| Vacuum Formed Article Crystallinity | Degree of Crystallinity | 100 | 100 | 100 | 100 | 100 | 100 |

* The amount of each of the raw materials used is expressed in an amount used (parts by weight) based on 100 parts by weight of the polylactic acid resin.
1) The amount of the nonionic surfactant used (parts by weight), based on 100 parts by weight of the plasticizer.
2) The amount of the crystal nucleating agent used (parts by weight), based on 100 parts by weight of the plasticizer.

[Table 3]

Table 3

| | | Ex. | | | | | | | Comp. Ex. | | |
|---|---|---|---|---|---|---|---|---|---|---|---|
| | | 12 | 13 | 14 | 15 | 16 | 17 | 18 | 6 | 7 | 8 |
| Components | | | | | | | | | | | |
| Polylactic Acid Resin | NW4032D | 100 | 100 | 100 | 100 | 100 | 100 | 100 | 100 | 100 | 100 |
| Plasticizer | $(MeEO_3)_2SA$ | 7.0 | 7.0 | 7.0 | 7.0 | 7.0 | 7.0 | 7.0 | 8.0 | 7.0 | 7.0 |
| Nonionic Surfactant | EMANON 4110 | 1.0 | - | - | - | - | - | 1.0 | - | - | 1.0 |
| | EMANON 1112 | - | 1.0 | - | - | - | | - | - | - | - |
| | ADEKA Pluronic 25R-2 | - | - | 1.0 | | - | 1.0 | - | - | - | - |
| | ADEKA Pluronic 25R-1 | - | - | - | 1.0 | 1.0 | - | - | - | - | - |
| | Emalex GIS-120 | - | - | - | - | - | - | - | - | 1.0 | - |
| Crystal Nucleating Agent | SPLIPACKS H | 0.3 | 0.3 | 0.3 | 0.3 | - | - | - | 0.3 | 0.3 | - |
| | SPLIPACKS ZHH | - | - | - | - | 03 | - | - | - | - | - |
| | SLIPACKS 8 | - | - | - | - | - | 0.3 | - | - | - | - |
| | SPLIPACKS 0 | - | - | - | - | - | - | 0.3 | - | - | - |
| | NJSTAR TF-1 | - | - | - | - | - | - | - | - | - | 0.3 |
| Hydrolysis Inhibitor | Carbodilite LA-1 | 0.2 | 0.2 | 0.2 | 0.2 | 0.2 | 0.2 | 0.2 | 0.2 | 0.2 | 0.2 |
| Amount of Nonionic Surfactant Used, Parts by Weight[1)] | | 14.2 | 14,2 | 14.2 | 14.2 | 14.2 | 14.2 | 14.2 | - | 14.2 | 14.2 |
| Amount of Crystal Nucleating Agent Used, Parts by Weight[2)] | | 4.3 | 4.3 | 4.3 | 4.3 | 4.3 | 4.3 | 4.3 | 3.8 | 4.3 | 4.3 |
| Die Setting Temperature During Preparation of Vacuum Formed Article, °C | | 90 | 90 | 90 | 90 | 90 | 90 | 90 | 90 | 90 | 90 |
| Crystallinity of Amorphous Sheet-Relative Degree of Crystallinity, % | | 43 | 43 | 44 | 45 | 43 | 45 | 44 | 49 | 50 | 49 |
| Bleeding Resistance of Sheet in Crystalline State | | A | A | A | A | A | A | A | A | A | A |

(continued)

| | | | | | | | | | | | | |
|---|---|---|---|---|---|---|---|---|---|---|---|---|
| Vacuum Formed Article | | | | | | | | | | | | |
| Fittability | Sheet Surface Temperature, °C | 68 | B | B | B | B | B | B | B | B | B | B |
| | | 70 | B | B | B | B | B | B | B | B | B | B |
| | | 72 | B | B | B | B | B | B | B | B | B | B |
| | | 74 | B | B | B | B | B | B | B | B | B | B |
| | | 76 | B | B | B | B | B | B | B | A | B | A |
| | | 78 | A | A | A | A | A | A | A | A | A | A |
| | | 80 | A | A | A | A | A | A | A | B | A | B |
| | | 82 | A | A | A | A | A | A | A | B | B | B |
| | | 84 | A | A | A | A | A | A | A | B | B | B |
| | | 86 | A | B | A | B | B | B | B | B | B | B |
| | | 88 | A | B | A | B | B | B | B | B | B | B |
| | | 90 | B | B | B | B | B | B | B | B | B | B |
| Heat Resistance | | | A | A | A | A | A | A | A | A | A | A |
| Transparency | | Haze, % Relative | 4.8 | 5.5 | 4.5 | 5.3 | 5.8 | 6.0 | 6.0 | 6.0 | 9.0 | 28.0 |
| Crystallinity | | Degree of Crystallinity | 100 | 100 | 100 | 100 | 100 | 100 | 100 | 100 | 100 | 100 |

* The amount of each of the raw materials used is expressed in an amount used (parts by weight) based on 100 parts by weight of the polylactic acid resin.
1) The amount of the nonionic surfactant used (parts by weight), based on 100 parts by weight of the plasticizer.
2) The amount of the crystal nucleating agent used (parts by weight), based on 100 parts by weight of the plasticizer.

From Tables 1 to 3, resin compositions containing a combination of a specified plasticizer, a specified nonionic surfactant, and a specified crystal nucleating agent have a wide temperature range in which sufficient fittability is obtained, i.e. a formable temperature range, and formed articles obtained in that range also had favorable heat resistance, transparency, and crystallinity, even if the holding time in the heating zone differs, thereby varying the temperatures of the sheet surface. In addition, from Table 2, those compositions in which a specified nonionic surfactant had a larger molecular weight and the amount of the plasticizer was smaller gave more favorable heat resistance of the sheet in an amorphous state.

The polylactic acid resin composition of the present invention can be suitably used in various industrial applications such as daily sundries, food wrapping materials, household electric appliance parts, packaging materials for household electric appliance parts, and automobile parts.

The present invention can relate to any one of the followings:

<1> A polylactic acid resin composition containing:

a polylactic acid resin;
a plasticizer;
a nonionic surfactant represented by the formula (1):

$$R^1\text{-}O(A^1O)_p\text{-}R^2 \qquad (1)$$

wherein $R^1$ is an alkyl group having from 8 to 22 carbon atoms, an acyl group having from 8 to 22 carbon atoms in total, or a hydrogen atom; $R^2$ is a hydrogen atom, an alkyl group having from 1 to 4 carbon atoms, or an acyl group having from 2 to 4 carbon atoms in total; $A^1$ is an alkylene group having 2 or 3 carbon atoms; and p is the number showing an average number of moles of oxyalkylene groups added that satisfies $0 < p \leq 300$, wherein p number of oxyalkylene groups represented by ($A^1O$) may be identical or different, and the repeating units, when different, may be either in a block form or a random form; and
a crystal nucleating agent represented by the formula (2):

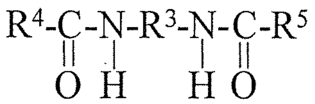

(2)

wherein $R^3$ is an alkylene group having from 1 to 10 carbon atoms; and $R^4$ and $R^5$ are a linear or branched alkyl group having from 5 to 21 carbon atoms, which may have a substituent, that may be identical or different, and/or
a crystal nucleating agent represented by the formula (3):

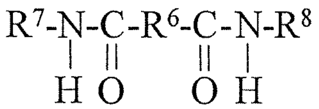

(3)

wherein $R^6$ is an alkylene group having from 1 to 10 carbon atoms; and $R^7$ and $R^8$ are a linear or branched alkyl group having from 6 to 22 carbon atoms, which may have a substituent, that may be identical or different.

<2> The polylactic acid resin composition according to <1>, wherein the plasticizer contains a compound represented by the formula (4):

$$R^9\text{-}O(A^2O)_m\text{-}CORCOO\text{-}(A^2O)_n\text{-}R^{10} \qquad (4)$$

wherein $R^9$ and $R^{10}$ are an alkyl group having from 1 to 4 carbon atoms or a benzyl group, wherein $R^9$ and $R^{10}$ may be identical or different; R is an alkylene group having from 1 to 4 carbon atoms; $A^2$ is an alkylene group having 2 or 3 carbon atoms, wherein m or n number of $A^2$'s may be identical or different, and each of m and n is the number showing an average number of moles of oxyalkylene groups added that satisfies $0 \leq m \leq 5, 0 \leq n \leq 5$, and $1 \leq m + n \leq 8$; and/or
a compound represented by the formula (5):

$$R^{11}O\text{-}CO\text{-}R^{11}\text{-}CO\text{-}[(OR^{13})_sO\text{-}CO\text{-}R^{12}\text{-}CO\text{-}]_tOR^{11} \quad (5)$$

wherein $R^{11}$ is an alkyl group having from 1 to 4 carbon atoms; $R^{12}$ is a linear alkylene group having from 2 to 4 carbon atoms; $R^{13}$ is an alkylene group having from 2 to 6 carbon atoms; s is an integer of from 1 to 6 showing an average number of moles of oxyalkylene groups added; and t is the number of from 1 to 6 showing the number of repeats of $(OR^{13})_sO\text{-}CO\text{-}R^{12}\text{-}CO\text{-}$, wherein all the $R^{12}$'s may be identical or different and wherein all the $R^{13}$'s may be identical or different.

<3> The polylactic acid resin composition according to <2>, wherein each of $R^9$ and $R^{10}$ in the formula (4) independently is preferably a methyl group, an ethyl group, a propyl group, an isopropyl group, a butyl group, an isobutyl group, or a benzyl group, and more preferably a methyl group or an ethyl group.

<4> The polylactic acid resin composition according to <2> or <3>, wherein R in the formula (4) is preferably a methylene group, an ethylene group, a propylene group, an isopropylene group, a butylene group, an isobutylene group, or a tetramethylene group, and more preferably an ethylene group, a propylene group, or an isopropylene group.

<5> The polylactic acid resin composition according to any one of <2> to <4>, wherein $A^2$ in the formula (4) is preferably an ethylene group, a propylene group, or an isopropylene group.

<6> The polylactic acid resin composition according to any one of <2> to <5>, wherein m and n in the formula (4) are preferably the numbers that satisfy $0 \leq m \leq 5$, $0 \leq n \leq 5$, and $1 \leq m + n \leq 8$, more preferably the numbers that satisfy $0 \leq m \leq 5$, $0 \leq n \leq 5$, and $4 \leq m + n \leq 8$, even more preferably the numbers that satisfy $0 \leq m \leq 5$, $0 \leq n \leq 5$, and $6 \leq m + n \leq 8$, and even more preferably each of the numbers is 3.

<7> The polylactic acid resin composition according to any one of <2> to <6>, wherein the compound represented by the formula (4) has an average molecular weight of preferably 250 or more, more preferably from 250 to 700, even more preferably from 300 to 600, and still even more preferably from 330 to 500.

<8> The polylactic acid resin composition according to any one of <2> to <7>, wherein the compound represented by the formula (4) is preferably a succinic acid ester, and more preferably a diester obtained from succinic acid and triethylene glycol monomethyl ether.

<9> The polylactic acid resin composition according to any one of <2> to <7>, wherein the compound represented by the formula (4) is preferably an ester compound obtained from adipic acid and a mixture of diethylene glycol monomethyl ether/benzyl alcohol, a weight ratio of which is 1:1.

<10> The polylactic acid resin composition according to <2>, wherein $R^{11}$ in the formula (5) is preferably a methyl group, an ethyl group, a propyl group, an isopropyl group, a butyl group, a *sec*-butyl group, or a *tert*-butyl group, more preferably a methyl group or an ethyl group, and even more preferably a methyl group.

<11> The polylactic acid resin composition according to <2> or <10>, wherein $R^{12}$ in the formula (5) is preferably an ethylene group, a 1,3-propylene group, or a 1,4-butylene group, and more preferably an ethylene group.

<12> The polylactic acid resin composition according to any one of <2>, <10>, and <11>, wherein $R^{13}$ in the formula (5) is preferably an ethylene group, a 1,2-propylene group, a 1,3-isopropylene group, a 1,2-butylene group, a 1,3-butylene group, a 1,4-butylene group, a 2-methyl-1,3-propylene group, a 1,2-pentylene group, a 1,4-pentylene group, a 1,5-pentylene group, a 2,2-dimethyl-1,3-propylene group, a 1,2-hexylene group, a 1,5-hexylene group, a 1,6-hexylene group, a 2,5-hexylene group, or a 3-methyl-1,5-pentylene group, and more preferably an ethylene group, a 1,2-propylene group, or a 1,3-propylene group.

<13> The polylactic acid resin composition according to any one of <2>, and <10> to <12>, wherein s in the formula (5) is preferably an integer of from 1 to 6, and more preferably an integer of from 1 to 3.

<14> The polylactic acid resin composition according to any one of <2>, and <10> to <13>, wherein t in the formula (5) is preferably the number of from 1 to 6, and more preferably the number of from 1 to 4.

<15> The polylactic acid resin composition according to any one of <2>, and <10> to <14>, wherein the compound represented by the formula (5) is preferably an oligoester obtained from at least one dibasic acid selected from succinic acid, glutaric acid, and adipic acid, and at least one dihydric alcohol selected from diethylene glycol, triethylene glycol, 1,2-propanediol, and 1,3-propanediol, and in the formula (5), t satisfies from 1.2 to 3.

<16> The polylactic acid resin composition according to any one of <2>, and <10> to <15>, wherein the carboxylic acid ester represented by the formula (4) and/or the carboxylic acid ester represented by the formula (5) is contained in the polylactic acid resin composition in an amount of preferably from 1 to 30 parts by weight, more preferably from 1 to 20 parts by weight, and even more preferably from 1 to 10 parts by weight, based on 100 parts by weight of the polylactic acid resin.

<17> The polylactic acid resin composition according to any one of <1> to <16>, wherein $R^1$ in the formula (1) is preferably an alkyl group having from 8 to 22 carbon atoms, an acyl group having from 8 to 22 carbon atoms in total, or a hydrogen atom, more preferably a linear or branched, saturated or unsaturated alkyl group having from 8 to 22 carbon atoms, a saturated or unsaturated acyl group having from 8 to 22 carbon atoms in total, or a hydrogen atom, and even more preferably a linear or branched, saturated or unsaturated alkyl group having from 8 to 22 carbon

atoms, a saturated or unsaturated acyl group having from 10 to 18 carbon atoms in total, or a hydrogen atom.

<18> The polylactic acid resin composition according to any one of <1> to <17>, wherein $R^2$ in the formula (1) is preferably a hydrogen atom, an alkyl group having from 1 to 4 carbon atoms, or an acyl group having from 2 to 4 carbon atoms in total, more preferably a hydrogen atom, a methyl group, an ethyl group, a propyl group, an isopropyl group, a butyl group, a *sec*-butyl group, a *tert*-butyl group, or an acetyl group, a propanoyl group, or a butanoyl group.

<19> The polylactic acid resin composition according to any one of <1> to <18>, wherein $R^2$ in the formula (1), when $R^1$ is an alkyl group having from 8 to 22 carbon atoms, or an acyl group having from 8 to 22 carbon atoms in total, is preferably a hydrogen atom or a methyl group, and more preferably a hydrogen atom.

<20> The polylactic acid resin composition according to any one to <19>, wherein $R^2$ in the formula (1), when $R^1$ is a hydrogen atom, is preferably a hydrogen atom.

<21> The polylactic acid resin composition according to any one to <20>, wherein $A^1$ in the formula (1) is preferably an ethylene group, a propylene group, or an isopropylene group, and more preferably an ethylene group or an isopropylene group.

<22> The polylactic acid resin composition according to any one to <21>, wherein p number of $A^1O$ in the formula (1) may be identical or different, and when different, the repeating units are preferably either in a block form or a random form, more preferably in a block form, even more preferably in a block form of polyoxypropylene-polyoxyethylene-polyoxypropylene or polyoxyethylene-polyoxypropylene-polyoxyethylene, and even more preferably in a block form of polyoxypropylene-polyoxyethylene-polyoxypropylene.

<23> The polylactic acid resin composition according to any one of <1> to <22>, wherein p in the formula (1) preferably satisfies $0 < p \leq 300$, and when $R^1$ is an alkyl group having from 8 to 22 carbon atoms or an acyl group having from 8 to 22 carbon atoms in total, preferably satisfying $2 \leq p \leq 50$, and more preferably satisfying $5 \leq p \leq 20$, or when $R^1$ is a hydrogen atom, preferably satisfying $10 \leq p \leq 200$, and more preferably satisfying $20 \leq p \leq 100$.

<24> The polylactic acid resin composition according to any one of <1> to <23>, wherein when $R^1$ in the formula (1) is a hydrogen atom, $(A^1O)_p$ preferably contains different $A^1O$'s, more preferably in a block form of polyoxypropylene-polyoxyethylene-polyoxypropylene or polyoxyethylene-polyoxypropylene-polyoxyethylene, even more preferably in a block form of polyoxypropylene-polyoxyethylene-polyoxypropylene, in that case the number p' constituting each of the block units each satisfies preferably $5 \leq p' \leq 80$, more preferably satisfies $5 \leq p' \leq 60$, and the polyoxyethylene EO and the polyoxypropylene PO are in a weight ratio EO/PO of preferably from 5/95 to 70/30, more preferably from 5/95 to 60/40, even more preferably from 10/90 to 50/50, even more preferably from 10/90 to 40/60, even more preferably from 10/90 to 30/70, and even more preferably from 15/85 to 25/75.

<25> The polylactic acid resin composition according to any one of <1> to <24>, wherein the average molecular weight of the compound represented by the formula (1) is preferably from 3 00 to 100,000, more preferably from 500 to 50,000, even more preferably from 500 to 10,000, and even more preferably from 500 to 6,000.

<26> The polylactic acid resin composition according to any one of <1> to <25>, wherein the compound represented by the formula (1) is preferably a mono- or diether compound obtained from an aliphatic alcohol having from 8 to 22 carbon atoms and a polyoxyethylene glycol or a polyoxypropylene glycol, or a mono- or diester compound obtained from a fatty acid having from 8 to 22 carbon atoms and a polyoxyethylene glycol or a polyoxypropylene glycol, or a methyl ether compound thereof, more preferably a fatty acid ester of polyethylene glycol or an ester obtained from a fatty acid and methyl polyglycol, and even more preferably an ester obtained from a long-chained fatty acid such as oleic acid and a polyglycol.

<27> The polylactic acid resin composition according to any one of <1> to <26>, wherein the compound represented by the formula (1) is contained in the polylactic acid resin composition in an amount of preferably from 0.1 to 10 parts by weight, more preferably from 0.1 to 5 parts by weight, and even more preferably from 0.1 to 3 parts by weight, based on 100 parts by weight of the polylactic acid resin.

<28> The polylactic acid resin composition according to any one of <2> to <27>, wherein the compound represented by the formula (1) is contained in an amount of preferably from 1 to 50 parts by weight, more preferably from 5 to 50 parts by weight, and even more preferably from 5 to 45 parts by weight, based on 100 parts by weight of a total amount of the plasticizer represented by the formula (4) and the plasticizer represented by the formula (5).

<29> The polylactic acid resin composition according to any one of <1> to <28>, wherein $R^3$ in the formula (2) is preferably an ethylene group, a propylene group, a tetramethylene group, a hexamethylene group, or a metaxylylene group, more preferably an ethylene group, a hexamethylene, or a metaxylylene group, and even more preferably an ethylene group.

<30> The polylactic acid resin composition according to any one of <1> to <29>, wherein each of $R^4$ and $R^5$ in the formula (2) is independently preferably a heptyl group, a nonyl group, an undecyl group, a tridecyl group, a pentadecyl group, a heptadecyl group, a heneicosyl group, a heptadecyl group, or a 11-hydroxypentadecyl group, more preferably an undecyl group, a tridecyl group, a pentadecyl group, a heptadecyl group, a heptadecyl group, and a 11-hydroxypentadecyl group, and a 11-hydroxypentadecyl group.

<31> The polylactic acid resin composition according to any one of <1> to <30>, wherein the compound represented

by the formula (2) is preferably an ethylenebis fatty acid amide, a propylenebis fatty acid amide, a butylenebis fatty acid amide, a hexamethylenebis fatty acid amide, or a metaxylenebis fatty acid amide, more preferably ethylenebis palmitamide, ethylenebis stearamide, ethylenebis oleamide, ethylenebis 12-hydroxystearamide, hexamethylenebis 12-hydroxystearamide, or metaxylenebis 12-hydroxystearamide, and even more preferably ethylenebis oleamide, ethylenebis 12-hydroxystearamide, hexamethylenebis 12-hydroxystearamide, or metaxylenebis 12-hydroxystearamide.

<32> The polylactic acid resin composition according to any one of <1> to <31>, wherein $R^6$ in the formula (3) is preferably an ethylene group, a propylene group, a tetramethylene group, a hexamethylene group, or an octamethylene group, more preferably an ethylene group, a tetramethylene group, or an octamethylene group, and even more preferably an ethylene group or a tetramethylene group.

<33> The polylactic acid resin composition according to any one of <1> to <32>, wherein each of $R^7$ and $R^8$ in the formula (3) is independently preferably an octyl group, a decyl group, a dodecyl group, a tetradecyl group, a hexadecyl group, an octadecyl group, a docosyl group, an octadecyl group, or a 12-hydroxyoctadecyl group, more preferably a dodecyl group, a tetradecyl group, a hexadecyl group, an octadecyl group, an octadecyl group, or a 12-hydroxyoctadecyl group, and even more preferably a hexadecyl group, an octadecyl group, an octadecyl group, or a 12-hydroxyoctadecyl group.

<34> The polylactic acid resin composition according to any one of <1> to <33>, wherein the compound represented by the formula (3) is preferably palmitylbis succinamide, stearylbis succinamide, oleylbis succinamide, 12-hydroxystearylbis succinamide, palmitylbis adipamide, stearylbis adipamide, oleylbis adipamide, or 12-hydroxystearylbis adipamide, and more preferably palmitylbis succinamide, stearylbis succinamide, oleylbis succinamide, or 12-hydroxystearylbis succinamide.

<35> The polylactic acid resin composition according to any one of <1> to <34>, wherein the crystal nucleating agent represented by the formula (2) and/or the crystal nucleating agent represented by the formula (3) is contained in the polylactic acid resin composition in an amount of preferably from 0.01 to 3 parts by weight, more preferably from 0.01 to 2 parts by weight, and even more preferably from 0.01 to 1 part by weight, based on 100 parts by weight of the polylactic acid resin.

<36> The polylactic acid resin composition according to any one of <1> to <3 5>, wherein the crystal nucleating agent represented by the formula (2) and/or the crystal nucleating agent represented by the formula (3) is contained in an amount of preferably from 0.5 to 50 parts by weight, more preferably from 0.5 to 30 parts by weight, even more preferably from 1.0 to 20 parts by weight, and still even more preferably from 2 to 10 parts by weight, based on 100 parts by weight of a total amount of the plasticizer represented by the formula (4) and the plasticizer represented by the formula (5).

<37> The polylactic acid resin composition according to any one of <1> to <36>, further containing a hydrolysis inhibitor.

<38> The polylactic acid resin composition according to any one of <1> to <37>, wherein the hydrolysis inhibitor is contained in an amount of preferably from 0.05 to 3 parts by weight, and more preferably from 0.10 to 2 parts by weight, based on 100 parts by weight of the polylactic acid resin.

<39> The polylactic acid resin composition according to any one of <1> to <38>, wherein the melt-kneaded mixture of the polylactic acid resin composition has a glass transition temperature Tg of preferably from 30° to 60°C, more preferably from 30° to 55°C, and even more preferably from 35° to 55°C.

<40> The polylactic acid resin composition according to any one of <1> to <39>, wherein the melt-kneaded mixture of the polylactic acid resin composition has a crystallization temperature Tc of preferably from 50° to 110°C, more preferably from 50° to 100°C, and even more preferably from 60° to 90°C.

<41> A sheet containing a polylactic acid resin composition as defined in any one of <1> to <40>, the sheet having a relative degree of crystallinity of 80% or less.

<42> A formed article obtainable by vacuum forming or pressure forming a sheet as defined in <41>.

<43> A method for secondary working of a sheet, characterized by vacuum forming or pressure forming a sheet as defined in <41>.

<44> A wrapping material made of a formed article as defined in <42>.

## Claims

**1.** A polylactic acid resin composition comprising:

a polylactic acid resin;
a plasticizer;
a nonionic surfactant represented by the formula (1):

$$R^1\text{-}O(A^1O)_p\text{-}R^2 \qquad (1)$$

wherein $R^1$ is an alkyl group having from 8 to 22 carbon atoms, an acyl group having from 8 to 22 carbon atoms in total, or a hydrogen atom; $R^2$ is a hydrogen atom, an alkyl group having from 1 to 4 carbon atoms, or an acyl group having from 2 to 4 carbon atoms in total; $A^1$ is an alkylene group having 2 or 3 carbon atoms; and p is the number showing an average number of moles of oxyalkylene groups added that satisfies $0 < p \leq 300$, wherein p number of oxyalkylene groups represented by ($A^1O$) may be identical or different, and the repeating units, when different, may be in either a block form or a random form; and
a crystal nucleating agent represented by the formula (2):

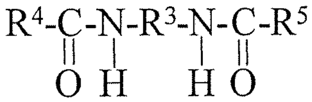

(2)

wherein $R^3$ is an alkylene group having from 1 to 10 carbon atoms; and $R^4$ and $R^5$ are a linear or branched alkyl group having from 5 to 21 carbon atoms, which may have a substituent, that may be identical or different, and/or
a crystal nucleating agent represented by the formula (3):

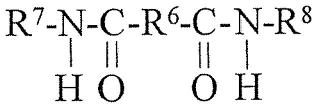

(3)

wherein $R^6$ is an alkylene group having from 1 to 10 carbon atoms; and $R^7$ and $R^8$ are a linear or branched alkyl group having from 6 to 22 carbon atoms, which may have a substituent, that may be identical or different.

**2.** The polylactic acid resin composition according to claim 1,
wherein the plasticizer comprises a compound represented by the formula (4):

$$R^9\text{-}O(A^2O)_m\text{-}CORCOO\text{-}(A^2O)_n\text{-}R^{10} \qquad (4)$$

wherein $R^9$ and $R^{10}$ are an alkyl group having from 1 to 4 carbon atoms or a benzyl group, wherein $R^9$ and $R^{10}$ may be identical or different; R is an alkylene group having from 1 to 4 carbon atoms; $A^2$ is an alkylene group having 2 or 3 carbon atoms, wherein m or n number of $A^2$'s may be identical or different, and each of m and n is the number showing an average number of moles of oxyalkylene groups added that satisfies $0 \leq m \leq 5$, $0 \leq n \leq 5$, and $1 \leq m + n \leq 8$; and/or a compound represented by the formula (5):

$$R^{11}O\text{-}CO\text{-}R^{12}\text{-}CO\text{-}[(OR^{13})_sO\text{-}CO\text{-}R^{12}\text{-}CO\text{-}]_tOR^{11} \qquad (5)$$

wherein $R^{11}$ is an alkyl group having from 1 to 4 carbon atoms; $R^{12}$ is a linear alkylene group having from 2 to 4 carbon atoms; $R^{13}$ is an alkylene group having from 2 to 6 carbon atoms; s is an integer of from 1 to 6 showing an average number of moles of oxyalkylene groups added; and t is the number of from 1 to 6 showing the number of repeats of $(OR^{13})_sO\text{-}CO\text{-}R^{12}\text{-}CO\text{-}$, wherein all the $R^{12}$'s may be identical or different
and wherein all the $R^{13}$'s may be identical or different.

**3.** The polylactic acid resin composition according to claim 2,
wherein the compound represented by the formula (4) is contained in an amount of from 1 to 30 parts by weight, the nonionic surfactant represented by the formula (1) is contained in an amount of from 0.1 to 10 parts by weight, and the crystal nucleating agent represented by the formula (2) and/or the crystal nucleating agent represented by the formula (3) is contained in an amount of from 0.01 to 3 parts by weight, based on 100 parts by weight of the polylactic acid resin.

**4.** The polylactic acid resin composition according to claim 2 or 3,
wherein the nonionic surfactant represented by the formula (1) is in an amount of from 1 to 50 parts by weight, based on 100 parts by weight of the compound represented by the formula (4).

5. The polylactic acid resin composition according to any one of claims 1 to 4, wherein in the formula (1) $R^1$ is an acyl group having from 8 to 22 carbon atoms in total, $R^2$ is a hydrogen atom, $A^1$ is an alkylene group having 2 carbon atoms, and p is the number that satisfies $2 \leq p \leq 50$.

6. The polylactic acid resin composition according to any one of claims 1 to 4, wherein in the formula (1) $R^1$ and $R^2$ are a hydrogen atom, p is the number that satisfies $10 \leq p \leq 200$, wherein p number of oxyalkylene groups represented by ($A^1O$) is non-identical, and the repeating units may be either in a block form or a random form.

7. The polylactic acid resin composition according to claim 6, wherein p number of oxyalkylene groups represented by ($A^1O$) in the formula (1) constitutes a polyoxypropylene-polyoxyethylene-polyoxypropylene in a block form, wherein the number p' of each of the repeating units of the block independently satisfies $5 \leq p' \leq 80$.

8. The polylactic acid resin composition according to claim 6 or 7, wherein p number of oxyalkylene groups represented by ($A^1O$) in the formula (1) constitutes a polyoxypropylene-polyoxyethylene-polyoxypropylene in a block form, wherein the polyoxyethylene (EO) and the polyoxypropylene (PO) are in a weight ratio, i.e. EO/PO, of from 5/95 to 70/30.

9. The polylactic acid resin composition according to any one of claims 1 to 8, wherein the crystal nucleating agent comprises the compound represented by the formula (2).

10. The polylactic acid resin composition according to any one of claims 2 to 9, wherein the plasticizer comprises the compound represented by the formula (4).

11. The polylactic acid resin composition according to any one of claims 2 to 10, comprising:

the compound of the formula (1) in which $R^1$ is an acyl group having from 8 to 22 carbon atoms in total, $R^2$ is a hydrogen atom, $A^1$ is an alkylene group having 2 carbon atoms, and p is the number that satisfies $2 \leq p \leq 50$;
the crystal nucleating agent comprising a compound represented by the formula (2), and
the plasticizer comprising a compound represented by the formula (4).

12. The polylactic acid resin composition according to any one of claims 2 to 10, comprising:

the compound of the formula (1) in which $R^1$ is a hydrogen atom, $R^2$ is a hydrogen atom, $A^1$ is an alkylene group having 2 or 3 carbon atoms, and p is the number showing an average number of moles of oxyalkylene groups added that satisfies $10 \leq p \leq 200$, wherein p number of oxyalkylene groups represented by ($A^1O$) is non-identical, and the repeating units are block forms of polyoxypropylene-polyoxyethylene-polyoxypropylene, wherein p' constituting each of the block units is the number that satisfies $5 \leq p' \leq 80$, and wherein the polyoxyethylene (EO) and the polyoxypropylene (PO) are in a weight ratio, i.e. EO/PO, of from 5/95 to 70/30;
the crystal nucleating agent comprising a compound represented by the formula (2), and
the plasticizer comprising a compound represented by the formula (4).

13. The polylactic acid resin composition according to any one of claims 1 to 12, wherein a crystallization temperature Tc is from 60° to 90°C.

14. A sheet comprising a polylactic acid resin composition as defined in any one of claims 1 to 13, the sheet having a relative degree of crystallinity of 80% or less.

15. A formed article obtainable by vacuum forming or pressure forming a sheet as defined in claim 14.

16. A method for secondary forming of a sheet, **characterized by** vacuum forming or pressure forming a sheet as defined in claim 14.

17. A wrapping material made of a formed article as defined in claim 15.

[Figure 1]

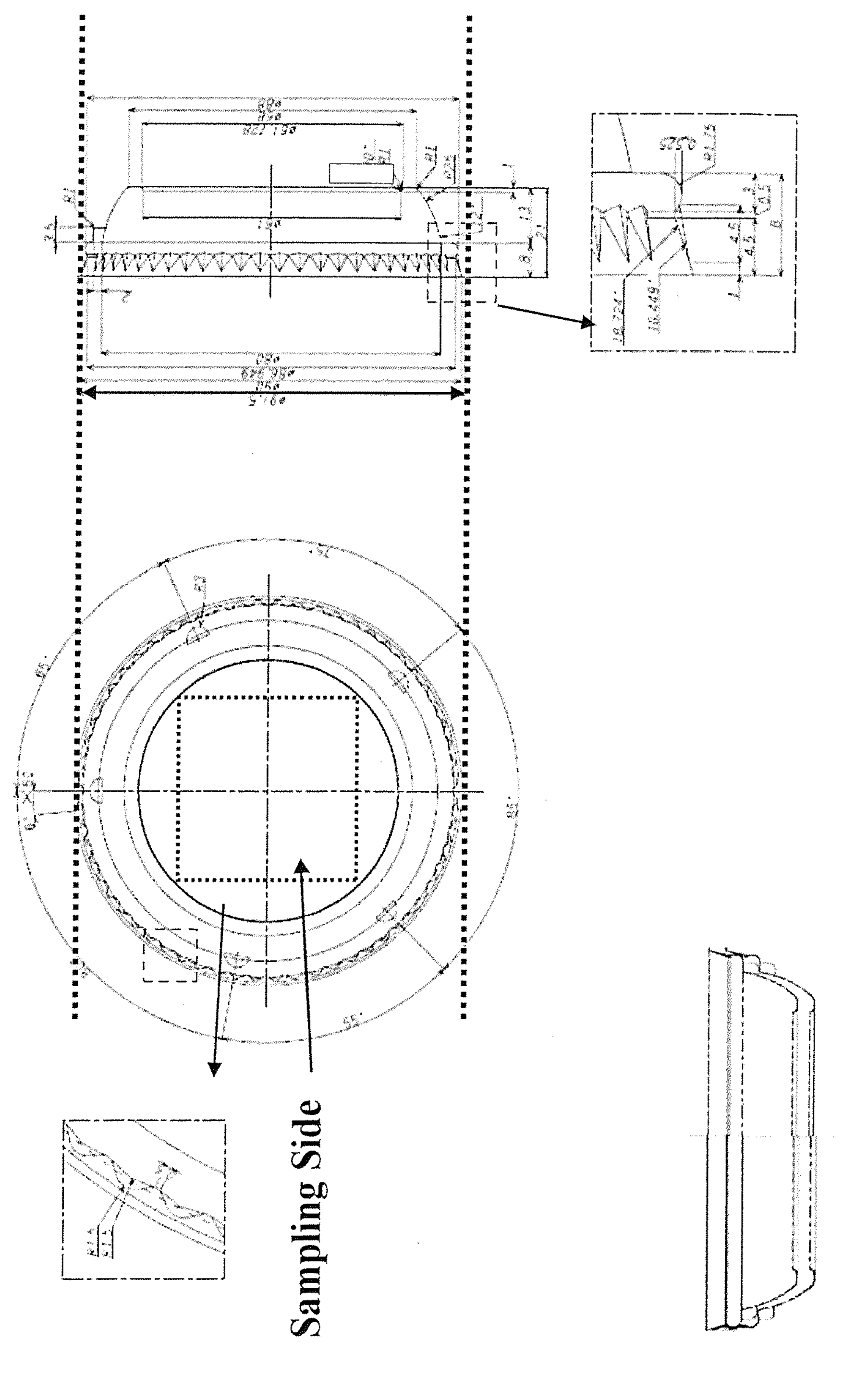


PILED VIEW
(CROSS-SECTIONAL VIEW)

**FIG. 1 VACUUM-FORMED ARTICLE (CUP-SHAPED)**

## INTERNATIONAL SEARCH REPORT

International application No.
PCT/JP2012/052729

A. CLASSIFICATION OF SUBJECT MATTER
*C08L67/04*(2006.01)i, *B29C51/10*(2006.01)i, *C08K5/06*(2006.01)i, *C08K5/10*(2006.01)i, *C08K5/20*(2006.01)i, *C08L71/02*(2006.01)i, *C08L101/16*(2006.01)n

According to International Patent Classification (IPC) or to both national classification and IPC

B. FIELDS SEARCHED

Minimum documentation searched (classification system followed by classification symbols)
C08L67/04, B29C51/10, C08K5/06, C08K5/10, C08K5/20, C08L71/02, C08L101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-155489 A (Toray Industries, Inc.), 16 July 2009 (16.07.2009), claims; paragraphs [0005], [0018], [0029], [0032], [0033], [0034], [0109], [0115] to [0161]<br>(Family: none) | 1,5,6,9,11, 13-17<br>2-4,7,8,10, 12 |
| Y | JP 11-181262 A (Shimadzu Corp.), 06 July 1999 (06.07.1999), claims; paragraphs [0001], [0008], [0009], [0024], [0031], [0032], [0035], [0036], [0040], [0045], [0046]<br>(Family: none) | 2-4,7,8,10, 12 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 March, 2012 (21.03.12) | 03 April, 2012 (03.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/052729

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2008-37941 A (Mitsui Chemicals, Inc.),<br>21 February 2008 (21.02.2008),<br>claims; paragraphs [0009] to [0014], [0032], [0037] to [0040], [0047], [0048], [0050], [0053], [0067], [0070], [0071], [0078], [0082] to [0084]<br>(Family: none) | 1,6-9,13-17<br>7,8,12 |
| A | JP 2007-246624 A (Asahi Kasei Chemicals Corp.),<br>27 September 2007 (27.09.2007),<br>claims; paragraphs [0015] to [0024]<br>(Family: none) | 1-17 |
| A | JP 2009-286999 A (Kao Corp.),<br>10 December 2009 (10.12.2009),<br>claims; paragraphs [0005], [0006], [0008], [0046]<br>& US 2011/0054089 A1 & EP 2272913 A1<br>& WO 2009/133958 A1 & KR 10-2011-0008181 A<br>& CN 102015889 A | 1-17 |

Form PCT/ISA/210 (continuation of second sheet) (July 2009)

**INTERNATIONAL SEARCH REPORT**

International application No.
PCT/JP2012/052729

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention of claim 1 is not novel as disclosed in the documents (JP 2009-155489 A and JP 2008-37941 A) which are listed in Box C. Therefore, the invention of claim 1 does not have a "special technical feature" within the meaning of PCT Rule 13.2, second sentence.

Consequently, there is no technical feature involving one or more of the same or corresponding special technical features among the inventions of claims 1-17, and it is not considered that the inventions of claims 1-17 are so linked as to form a single general inventive concept.

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007130895 A
- JP 2007246624 A
- JP 2006176748 A